# EUROPÄISCHE PATENTSCHRIFT

(11) **EP 4 011 603 B1**
(45) Veröffentlichungstag und Bekanntmachung des Hinweises auf die Patenterteilung: **09.10.2024**
(21) Anmeldenummer: 21206358.0
(22) Anmeldetag: 04.11.2021
(51) Int. Cl.: B29C 65/00, B65B 31/02, B65B 7/16, B65B 59/00, B65B 51/10

(54) **SIEGELSTATION**
SEALING STATION
STATION DE SCELLAGE

(30) Priorität: 11.12.2020 DE 102020133168; 17.02.2021 DE 102021103685
(43) Veröffentlichungstag der Anmeldung: 15.06.2022
(73) Patentinhaber: Weber Food Technology GmbH, 35236 Breidenbach (DE)
(72) Erfinder: DIETRICH, Andreas, 35216 Biedenkopf (DE); DOHT, Rainer, 33829 Borgholzhausen (DE); SCHMITT, Alexander, 35232 Friedensdorf (DE)
(74) Vertreter: Manitz Finsterwald Patent- und Rechtsanwaltspartnerschaft mbB

(56) Entgegenhaltungen:
- EP-A1- 3 204 210
- EP-B1- 3 204 210
- WO-A1-2018/220574
- DE-A1- 102004 051 923
- GB-A- 2 238 997
- IT-A1- 201800 008 101
- US-A1- 2015 113 915
- US-A1- 2018 155 074
- US-B2- 9 003 746

## Beschreibung

Die Erfindung betrifft eine Siegelstation für eine Verpackungsmaschine, insbesondere für Lebensmittelprodukte, zum Verschließen von Packungen durch Verbinden von Packungsbestandteilen durch Beaufschlagen mit Wärme und Druck, insbesondere durch Siegeln oder Schweißen, gemäß dem Oberbegriff des Anspruchs 1. Die Erfindung betrifft außerdem eine Verpackungsmaschine mit zumindest einer derartigen Siegelstation. Ferner betrifft die Erfindung ein Verfahren zum Anpassen einer Siegelstation an mit dieser zu verschließende Packungen.

Derartige Siegelstationen und mit diesen ausgestattete Verpackungsmaschinen sind grundsätzlich bekannt und werden nachstehend beispielhaft in Verbindung mit Fig. 1 und Fig. 3 näher beschrieben. Zum Stand der Technik wird auch verwiesen auf WO 2018/220574 A1, US 9,003,746 B2 und US 2018 / 155074 A1.

Ferner ist es bereits bekannt, ein auch einfach als Unterwerkzeug bezeichnetes Unterteil einer Siegelstation an Form und Größe der unteren Packungsbestandteile jeweiliger Packungen anzupassen. Bei diesen unteren Packungsbestandteilen kann es sich um Vertiefungen handeln, die an einer der Siegelstation vorgelagerten Arbeitsstation der Verpackungsmaschine, nämlich einer Tiefziehstation, in einer meist als Unterfolie bezeichneten Folienbahn durch Tiefziehen geformt worden sind. Alternativ kann es sich bei den unteren Packungsbestandteilen um vorgefertigte Trays oder Schalen handeln. Eine zum Verschließen derartiger Trays bzw. Schalen ausgebildete Siegelstation wird auch als Traysealer bezeichnet.

Unabhängig davon, ob die unteren Packungsbestandteile geformte Vertiefungen sind oder von vorgefertigten Trays bzw. Schalen gebildet werden, erfolgt das Schließen der Packungen dadurch, dass das Siegelwerkzeug des Oberteils und ein Gegenwerkzeug des Unterteils gegeneinander gepresst werden, und zwar unter Zwischenlage eines dabei mit Wärme und Druck beaufschlagten Randbereiches einer jeweiligen Packung, der neben einem das verpackte Produkt enthaltenden Produktbereich der Packung verläuft und insbesondere den Produktbereich umgibt. Hierdurch entsteht im Randbereich eine Siegelnaht, an der Oberfolie und Unterfolie bzw. Oberfolie und Tray bzw. Schale miteinander verbunden sind und dadurch die Packung dicht verschlossen ist.

Bei Packungen mit geformten Vertiefungen oder Trays bzw. Schalen für die Produkte befinden sich die Produkte unterhalb der Siegelebene in einer von der Vertiefung oder dem Tray bzw. der Schale gebildeten, mechanisch vergleichsweise stabilen Aufnahme, so dass das Verschließen der Packung mittels der in einer ebenen Konfiguration vorliegenden Oberfolie prinzipiell unproblematisch ist, da die beim Betrieb einer Siegelstation üblichen Arbeitsabläufe die in der Aufnahme unterhalb der Siegelebene befindlichen Produkte nicht beeinträchtigen.

Bei diesen Arbeitsabläufen handelt es sich insbesondere um das Evakuieren des Packungsinnenraumes, das Begasen, also das Beaufschlagen des Packungsinnenraumes mit Schutzgas, sowie den eigentlichen Verbindungsvorgang durch Beaufschlagen des Randbereiches mit Wärme und Druck beim Zusammenwirken von beheiztem Siegelwerkzeug und Gegenwerkzeug. Hinsichtlich dieser Arbeitsabläufe, die dem Fachmann grundsätzlich bekannt sind, wird rein beispielhaft auf DE 10 2018 116 507 A1 verwiesen.

Es existieren jedoch andere Arten von Packungen, die ebenfalls an einer Siegelstation verschlossen werden und bei denen die Produkte sich nicht oder zumindest nicht vollständig unterhalb der Siegelebene in einer mechanisch stabilen Aufnahme befinden. Bei derartigen Packungen liegt der untere Packungsbestandteil, beispielsweise eine Unterfolie, in einer zumindest im Wesentlichen ebenen Konfiguration vor, und die Produkte liegen jeweils auf diesem unteren Packungsbestandteil auf, tragen also nach oben auf, sodass in der Siegelstation der Produktbereich einer jeweiligen Packung zumindest zum ganz überwiegenden Teil oberhalb der Siegelebene und damit innerhalb des Oberteils der Siegelstation gelegen ist.

Derartige Packungen sind beispielsweise in Form sogenannter Skin-Verpackungen bekannt. Eine andere Art von Packungen, für welche die Erfindung besonders vorteilhaft verwendet werden kann, sind sogenannte Mehrlagenpackungen. Derartige Mehrlagenpackungen sind beispielsweise in DE 10 2018 108 640 A1 beschrieben, wo eine Möglichkeit für die Herstellung von Mehrlagenpackungen offenbart ist. In Mehrlagenpackungen liegen wenigstens zwei Produkte, beispielsweise zwei Portionen, übereinander, wobei jeweils zwei unmittelbar übereinander liegende Produktlagen durch eine Mittelfolie voneinander getrennt sind. Die mehreren Produktlagen bilden folglich zusammen den Produktbereich im Sinne der vorliegenden Offenbarung. Die Mittelfolien werden manchmal auch als Zwischenfolien oder - genauso wie die oberste Folie der Packung - als Oberfolien bezeichnet. In der vorliegenden Offenbarung werden, wie in der erwähnten DE 10 2018 108 640 A1, alle zwischen der untersten Folie (der Unterfolie) und der obersten Folie (der Oberfolie) liegenden Folien jeweils als Mittelfolie bezeichnet.

Jedenfalls dann, wenn derartige Packungen mit nach oben auftragenden Produktbereichen verschlossen werden sollen, grundsätzlich aber auch in anderen Fällen, kann vorgesehen sein, dass das Oberteil zu einem so genannten Oberhub in der Lage ist, d.h. wenn zum Öffnen und Schließen der wenigstens einen Kammer das Oberteil und das Unterteil relativ zueinander senkrecht zur Siegelebene bewegt werden, erfolgt diese Relativbewegung dadurch, dass zumindest das Oberteil bewegt wird und damit einen Oberhub ausführt, um die Kammer zu öffnen und anschließend wieder zu schließen. Hierdurch kann erreicht werden, dass das Oberteil zum Öffnen der Kammer soweit angehoben wird, dass die nach oben auftragenden Produktbereiche in die Kammer hinein bewegt werden können. Zusätzlich zu einem solchen Oberhub des Oberteils kann vorgesehen sein, dass das Unterteil einen Unterhub ausführen, d.h. ebenfalls zum Öffnen und Schließen der Kammer bewegt werden kann.

Für derartige Packungen mit nach oben auftragenden, also mit in einem relevanten Ausmaß oberhalb der Siegelebene liegenden Produktbereichen, muss folglich im Oberteil der Siegelstation ein Raum zur Aufnahme dieser Produktbereiche vorhanden sein. Aufgrund der erwähnten Arbeitsabläufe in einer Siegelstation ist ein im Oberteil der Siegelstation gelegenes Produkt Einflüssen ausgesetzt, die das Produkt beeinträchtigen können. Durch beim Evakuieren und Begasen auftretende Gasströmungen innerhalb der Packung kann der Produktaufbau gestört werden, was insbesondere dann relevant sein kann, wenn das Produkt eine Mehrzahl von einzelnen, vergleichsweise leichten und/oder eine relativ große Angriffsfläche für Gasströmungen bietenden Bestandteilen wie z.B. gefalteten oder in anderer Weise geformten Wurst-, Schinken- oder Käsescheiben umfasst. Da das Oberteil der Siegelstation das beheizbare Siegelwerkzeug beinhaltet, ist ein im Oberteil gelegenes Produkt außerdem potentiell höheren Temperaturen ausgesetzt als ein unterhalb der Siegelebene gelegenes Produkt. Zudem erhöht ein im Oberteil vorgesehener Raum den Schutzgasverbrauch und die Evakuierungszeit. Insbesondere der in vielen Fällen notwendige Schutz der Produkte bzw. der Produktbereiche der Packungen vor dem Siegelwerkzeug erfordert besondere konstruktive Maßnahmen wie z.B. das Vorsehen spezieller Schutzelemente, die nicht oder nur mit verhältnismäßig großem Aufwand ausgewechselt werden können, weshalb Siegelstationen mit derartigen Oberteilen bei Produktwechseln, also bei einem Wechsel von einer Packungsart auf eine andere Packungsart, die sich hinsichtlich der Geometrie ihrer Produktbereiche voneinander unterscheiden, problematisch sein und einen immensen Umrüstaufwand mit sich bringen können, der in manchen Fällen das Auswechseln des kompletten Oberteils bedeuten kann.

Diejenige Ebene, die in der vorliegenden Offenbarung als Siegelebene bezeichnet wird, wird auf dem hier in Rede stehenden Fachgebiet auch als Folienebene bezeichnet, da in der Praxis bei dem in der Siegelebene erfolgenden Verbinden der Packungsbestandteile an der Siegelstation eine oder mehrere Folien beteiligt sind.

Aufgabe der Erfindung ist es daher, eine Siegelstation der eingangs genannten Art zu schaffen, die zum Verschließen von Packungen mit zumindest teilweise oberhalb der Siegelebene gelegenen Produktbereichen geeignet ist und dabei die vorstehend genannten Nachteile möglichst weitgehend vermeidet.

Die Lösung dieser Aufgabe erfolgt durch die Merkmale des Anspruchs 1.

Durch den zumindest teilweise oberhalb der Siegelebene gelegenen Packungsraum können die zu verschließenden Packungen jeweils mit ihrem Produktbereich in das Oberteil hineinragen, d.h. das einen solchen Aufnahmeraum aufweisende Oberteil kann zusammen mit dem Unterteil, das in herkömmlicher Weise aufgebaut sein kann, solche Packungen verschließen, bei denen jeweils der ein verpacktes Produkt enthaltende Produktbereich zumindest teilweise oberhalb der Siegelebene liegt. Insbesondere können so mit der erfindungsgemäßen Siegelstation auch die vorstehend erwähnten Mehrlagenpackungen verschlossen werden.

Erfindungsgemäß ist der Aufnahmeraum derart ausgebildet, dass der darin gelegene Packungsraum an die Größe und/oder an die Form des jeweiligen Produktbereiches angepasst werden kann, indem die entsprechende Anzahl von hierfür vorgesehenen Passeinsätzen in den Aufnahmeraum eingebracht wird. Form, Grö-ße und Anzahl der separaten Passeinsätze ist hierbei grundsätzlich beliebig, so dass die Möglichkeit eröffnet ist, dem für den jeweiligen Produktbereich vorgesehenen Packungsraum innerhalb des Aufnahmeraums des Oberteils prinzipiell jede beliebige Form und Größe zu verleihen. Der Packungsraum kann folglich dem jeweiligen Produktbereich hinsichtlich Form und Größe derart angenähert werden, dass der Produktbereich den Packungsraum zumindest weitgehend oder vollständig ausfüllt. Die Passeinsätze können derart gestaltet sein, dass es für den Produktbereich unschädlich ist, wenn der Produktbereich einen oder mehrere der Passeinsätze berührt.

Bevorzugt wird der Packungsraum in Abhängigkeit von Größe und/oder Form des jeweiligen erwarteten Produktbereiches entweder durch Weglassen jedweder Passeinsätze oder durch Einbringen eines oder mehrerer Passeinsätze derart gebildet, dass keine mechanische Einwirkung auf den Produktbereich erfolgt, d.h. der Packungsraum soll nicht formverändernd oder formgebend auf den Produktbereich wirken. Vielmehr soll der Packungsraum derart an den jeweiligen Produktbereich angepasst werden, dass der Packungsraum unerwünschte Bewegungen des Produktbereiches insbesondere aufgrund von Einflüssen durch die Arbeitsabläufe in der Siegelstation verhindert, d.h. als eine Art "Wegbegrenzer" für den Produktbereich bzw. für den das jeweils verpackte Produkt umgebenden Packungsbestandteil, z.B. die das Produkt umgebende Folienlage, dient.

Das während des Betriebs der Siegelstation verbleibende Volumen innerhalb des Packungsraums kann hierdurch minimiert werden. Dadurch werden der Schutzgasverbrauch und die Evakuierungszeit minimiert. Außerdem werden hierdurch störende Einflüsse der beim Evakuieren und Begasen auftretenden Gasströmungen auf den Produktbereich auf ein Minimum reduziert.

Die Vorteile der Erfindung beschränken sich nicht auf die Verwendung für Mehrlagenpackungen oder andere Packungen mit zumindest teilweise oberhalb der Siegelebene gelegenen Produktbereichen. Die jeweiligen Packungen können auch lediglich mit ihrem jeweiligen oberen Packungsbestandteil, insbesondere einer Oberfolie, über die Siegelebene nach oben vorstehen und somit innerhalb des Oberteils liegen. Während also das verpackte Produkt selbst vollständig unterhalb der Siegelebene liegt, kann die Oberfolie zumindest teilweise oberhalb der Siegelebene liegen. Derjenige Teil des Produktbereiches einer derartigen Packung, der oberhalb der Siegelebene liegt, wird in diesem Fall also nur von dem oberen Packungsbestandteil, also insbesondere einer Oberfolie, gebildet. Durch die erfindungsgemäße Anpassbarkeit des Packungsraums kann so einer unterschiedlichen Dicke des oberen Packungsbestandteils Rechnung getragen werden, d.h. nicht nur eine Anpassung an die verpackten Produkte selbst, sondern auch eine Anpassung lediglich an Parameter eines Packungsbestandteils, z.B. an unterschiedliche Folienstärken einer Oberfolie, kann mit der erfindungsgemäßen Siegelstation erreicht werden.

Wenn im Rahmen dieser Offenbarung von einem Siegeln oder Versiegeln die Rede ist, dann schließt dies ein Verbinden durch Schweißen oder Verschweißen nicht aus. Auf dem hier in Rede stehenden Fachgebiet werden beide Begriffe verwendet. Der Begriff "Siegeln" wird insbesondere dann verwendet, wenn thermoplastische Beschichtungen von Trägerstoffen unter Einwirkung von Wärme und ggf. auch von Druck miteinander verbunden werden, wobei die Trägerstoffe selbst nicht aufgeschmolzen werden. Von einem Schweißen spricht man insbesondere allgemein dann, wenn thermoplastische Kunststoffe unter Einwirkung von Wärme mit oder ohne Druck miteinander verbunden werden. Deshalb kann das Siegeln auch als Schweißen bezeichnet werden, wenn man lediglich die Beschichtungen betrachtet. Im Rahmen dieser Offenbarung sind daher die Begriffe "Siegeln" und "Schweißen" einander nicht ausschließend und folglich allgemein im Sinne von "Verbinden" zu verstehen. Umgekehrt ist der Begriff "Verbinden" so zu verstehen, dass er - je nach konkreter Anwendung und konkreten Materialien - sowohl ein Versiegeln als auch ein Verschweißen umfasst.

Vorzugsweise ist die Siegelstation dazu ausgebildet, gleichzeitig mehrere Packungen zu verschließen (vgl. die an anderer Stelle anhand der Figuren beschriebenen Ausführungsbeispiele der Erfindung), d.h. Oberteil und Unterteil begrenzen dann mehrere Kammern, in denen jeweils Siegelwerkzeug und Gegenwerkzeug einen Aufnahmeraum für eine jeweilige Packung begrenzen.

Weitere vorteilhafte Ausgestaltungen der Erfindung sind auch in den abhängigen Ansprüchen, der Zeichnung sowie der nachfolgenden Beschreibung angegeben.

Bei einigen Ausführungsbeispielen der erfindungsgemäßen Siegelstation kann im Aufnahmeraum oberhalb der Siegelebene zumindest ein einteiliges oder mehrteiliges Produktschutzelement angeordnet sein, wobei zumindest ein Passeinsatz über und/oder unter das Produktschutzelement in den Aufnahmeraum einbringbar ist.

Das Siegelwerkzeug ist mittels einer beliebigen steuerbaren Stelleinrichtung, z.B. mittels eines Antriebs in Form eines aufblasbaren Schlauches oder Kissens, zwischen einer angehobenen passiven Stellung, in der insbesondere ein Evakuieren und Begasen bei geschlossener Kammer erfolgen kann, und einer abgesenkten aktiven Stellung, in welcher der Siegelvorgang durch Beaufschlagen der Randbereiche der Packungen erfolgt, senkrecht zur Siegelebene bewegbar. Wenn gemäß dem vorstehend erwähnten Ausführungsbeispiel ein Produktschutzelement vorgesehen ist, dann ist es grundsätzlich möglich, dass dieses zusammen mit dem Siegelwerkzeug senkrecht zur Siegelebene bewegbar ist. Bevorzugt sind allerdings solche Ausführungsbeispiele, bei denen das Produktschutzelement während des Betriebs der Siegelstation in einer unveränderlichen Höhenlage bezüglich der Siegelebene angebracht ist. Hierdurch kann insbesondere eine definierte, während des Betriebs gleichbleibende Niederhalteposition für das Produktschutzelement vorgegeben werden, so dass eine gleichbleibende Wirkung auf die Randbereiche der Packungen sichergestellt ist. Je nach konkreter Ausgestaltung kann das Produktschutzelement direkt oder über einen oder mehrere der Passeinsätze an einem in einer unveränderlichen Höhenlage bezüglich der Siegelebene angebrachten Träger befestigt ist, der z.B. an einem Gehäuse des Oberteils angebracht ist.

Insbesondere kann also vorgesehen sein, dass bei geschlossener Siegelstation lediglich das Siegelwerkzeug und dessen Stelleinrichtung bzw. dessen Antrieb eine Auf- und Abbewegung durchführt, die erwähnten übrigen Komponenten aber feststehend angebracht sind.

Durch ein derartiges Produktschutzelement kann der Produktbereich einer jeweiligen Packung vor störenden Einflüssen geschützt werden, die anderenfalls zu einer Beeinträchtigung der Packung und somit des darin verpackten Produkts führen könnten. Das Produktschutzelement kann derart ausgebildet sein, dass es sowohl vor mechanischen als auch vor thermischen Einflüssen schützen kann.

Insbesondere kann vorgesehen sein, dass das Produktschutzelement derart ausgebildet und angeordnet ist, dass der Packungsraum zumindest im Wesentlichen gegenüber dem Siegelwerkzeug, insbesondere gegenüber sich senkrecht zur Siegelebene erstreckenden Seitenwänden des Siegelwerkzeugs, abgeschirmt ist.

Des Weiteren kann bei manchen Ausführungsbeispielen vorgesehen sein, dass die Passeinsätze in einer parallel zur Siegelebene verlaufenden Ebene jeweils kleiner sind als das Produktschutzelement und derart im Aufnahmeraum relativ zu dem Produktschutzelement positionierbar sind, dass die Randbereiche der Passeinsätze jeweils gegenüber einem Randbereich des Produktschutzelements zurückspringen.

Hierdurch kann ein ausreichend großer Abstand der Passeinsätze von dem Siegelwerkzeug sichergestellt werden.

Des Weiteren kann bei manchen Ausführungsbeispielen der Erfindung vorgesehen sein, dass das Produktschutzelement einen Randbereich aufweist und derart ausgebildet und angeordnet ist, dass es zumindest in der Nähe eines Bereiches, an dem das Siegelwerkzeug und das Gegenwerkzeug zum Beaufschlagen eines Randbereiches einer jeweiligen Packung gegeneinander pressbar sind, mit seinem Randbereich als Niederhalter für die Packung wirksam sein kann.

Eine korrekte Positionierung der Packung während des Verschließvorgangs kann auf diese Weise durch das Produktschutzelement gewährleistet werden.

Generell und unabhängig von der konkreten Ausgestaltung des Produktschutzelementes kann dieses also eine Doppelfunktion erfüllen, nämlich als Schutz des Produktbereiches einer jeweiligen Packung und/oder eines oder mehrerer Passeinsätze und als Niederhalter für eine jeweilige Packung, insbesondere im Randbereich oder im Übergangsbereich zwischen Randbereich und Produktbereich der Packung.

In manchen Ausführungsbeispielen der Erfindung kann das Produktschutzelement plattenförmig ausgebildet sein, wobei zumindest einer der Passeinsätze über das Produktschutzelement in den Aufnahmeraum einbringbar ist. Ein plattenförmiges Produktschutzelement kann insbesondere dann eingesetzt werden, wenn vergleichsweise flache Produkte verpackt sind, wie beispielsweise Portionen mit einer relativ geringen Anzahl von Scheiben, z.B. Wurst-, Schinken- oder Käsescheiben, oder relativ flache Fleischstücke.

In manchen Weiterbildungen kann vorgesehen sein, dass die senkrecht zur Siegelebene gemessene Lage des plattenförmigen Produktschutzelements relativ zur Siegelebene durch die eingebrachten Passeinsätze bestimmt ist. Die Höhe und die Anzahl der eingebrachten Passeinsätze bestimmt folglich die Lage des plattenförmigen Produktschutzelements, welches die unmittelbare Begrenzung des Packungsraums nach oben darstellt. Die Passeinsätze selbst brauchen nicht für eine unmittelbare Begrenzung des Packungsraums ausgelegt zu sein. Wenn eine Berührung des Produktbereichs einer jeweiligen Packung durch eine obere Begrenzung des Packungsraums toleriert werden kann oder erwünscht ist, braucht lediglich die Abschlussplatte, aber keiner der Passeinsätze für einen Kontakt mit dem Produktbereich ausgelegt zu sein. Dies vereinfacht Herstellung und Montage der Passeinsätze sowie Umbauten am Siegelwerkzeug.

Alternativ kann gemäß einigen Ausführungsbeispielen der Erfindung vorgesehen sein, dass das Produktschutzelement haubenförmig ausgebildet ist und zumindest einer der Passeinsätze unterhalb des Produktschutzelements in den Aufnahmeraum einbringbar ist. Ein haubenförmiges Produktschutzelement, das im Folgenden auch einfach als Schutzhaube bezeichnet wird, kann insbesondere für solche Produkte verwendet werden, die einen höheren oder komplexer geformten Aufbau aufweisen als flache Produkte. Der Raum unterhalb des haubenförmigen Produktschutzelements kann durch einen oder mehrere Passeinsätze oder auch durch Weglassen jedweder Passeinsätze an das jeweilige Produkt bzw. den jeweiligen Produktbereich der Packung angepasst werden. Sich in Richtung der Siegelebene erstreckende Seitenwände der Produktschutzhaube können den jeweiligen Produktbereich vor äußeren Einflüssen schützen, insbesondere vor einer thermischen Einwirkung des Siegelwerkzeugs.

In manchen Weiterbildungen kann vorgesehen sein, dass die senkrecht zur Siegelebene gemessene Lage des haubenförmigen Produktschutzelements relativ zur Siegelebene unabhängig von der Anzahl der eingebrachten Passeinsätze fest vorgegeben ist, wobei in dem Produktschutzelement ein in einer senkrecht zur Siegelebene gemessenen Höhe verstellbares und in einer von der Anzahl der eingebrachten Passeinsätze abhängigen Höhe fixierbares Abschlusselement angeordnet ist. Eine unmittelbare Begrenzung des Packungsraums erfolgt hierbei nicht durch einen der Passeinsätze, sondern durch das in der Höhe verstellbare Abschlusselement. Eine eingestellte Höhe des Abschlusselements bestimmt somit den Raum, der am Produktschutzelement für einen oder mehrere Passeinsätze zur Verfügung steht.

Insbesondere in Abhängigkeit von der Form der zu verpackenden Produkte bzw. des Produktbereiches der jeweiligen Packung kann das Abschlusselement plattenförmig oder an seiner Unterseite konkav ausgebildet sein.

In manchen Ausführungsbeispielen ist die senkrecht zur Siegelebene gemessene Höhe von Seitenwänden des haubenförmigen Produktschutzelementes derart bemessen, dass der Packungsraum durch diese Seitenwände zumindest im Wesentlichen gegenüber dem Siegelwerkzeug, insbesondere gegenüber sich senkrecht zur Siegelebene erstreckenden Seitenwänden des Siegelwerkzeugs, abgeschirmt ist.

Bei einigen Ausführungsformen kann vorgesehen sein, dass zumindest einige Passeinsätze oder alle Passeinsätze identisch ausgeführt sind. Wenn keine Passeinsätze oder nur einige Passeinsätze identisch ausgeführt sind, dann können sich zumindest einige Passeinsätze hinsichtlich ihrer senkrecht zur Siegelebene gemessenen Höhe voneinander unterscheiden.

Die Erfindung ermöglicht es somit, einen Satz von unterschiedlichen Passeinsätzen bereitzustellen, insbesondere von Passeinsätzen mit unterschiedlicher Dicke, bei dem mit einer minimalen Anzahl von unterschiedlichen Passeinsätzen eine maximale Anzahl von unterschiedlichen Gesamthöhen von einem oder mehreren Passeinsätzen gebildet werden kann.

Des Weiteren kann vorgesehen sein, dass sich solche Passeinsätze, die sich hinsichtlich der Höhe nicht voneinander unterscheiden, hinsichtlich einer oder mehrerer anderer Eigenschaften voneinander unterscheiden, beispielsweise hinsichtlich des Materials, hinsichtlich bestimmter physikalischer Eigenschaften wie beispielsweise der thermischen Leitfähigkeit, oder hinsichtlich der Ausdehnung in einer Richtung parallel zur Siegelebene. Derartige Unterschiede können auch für solche Passeinsätze vorgesehen sein, die sich zudem hinsichtlich der Höhe voneinander unterscheiden.

Zumindest einige Passeinsätze oder alle Passeinsätze sind gemäß einer Alternative der Erfindung plattenförmig ausgebildet.

Gemäß einer weiteren Alternative der Erfindung sind zumindest einige Passeinsätze oder alle Passeinsätze jeweils an ihrer im eingebrachten Zustand der Siegelebene zugewandten Unterseite konkav ausgebildet. Die jeweilige Kavität kann grundsätzlich eine beliebige Form aufweisen. Die Passeinsätze können sich hinsichtlich Form und Größe der Kavität voneinander unterscheiden. Auf diese Weise ist es möglich, dem Packungsraum eine grundsätzlich beliebige Form und Größe zu verleihen.

Zumindest einige Passeinsätze oder alle Passeinsätze können einteilig ausgebildet sein. Dies kann die Handhabung der Passeinsätze erleichtern.

Die Passeinsätze können seitlich, z.B. durch Einschieben, oder von unten in das Oberteil einbringbar sein.

Des Weiteren können zumindest einige Passeinsätze oder alle Passeinsätze mehrteilig ausgebildet sein. Dies kann das Einbringen und gegebenenfalls Befestigen der Passeinsätze im Aufnahmeraum erleichtern.

Gemäß einigen Weiterbildungen der Erfindung kann vorgesehen sein, dass eine oder mehrere Positionierhilfen für die Passeinsätze vorgesehen sind, durch welche im Aufnahmeraum für die Passeinsätze jeweils zumindest eine Position relativ zur Siegelebene und/oder relativ zu einem Produktschutzelement, wie vorstehend erläutert, vorgegeben ist, und zwar in einer parallel zur Siegelebene verlaufenden Ebene und/oder in einer senkrecht zur Siegelebene gemessenen Höhe.

Bei diesen Positionierhilfen kann es sich beispielsweise um Führungsstifte oder Führungsbolzen handeln. Hierzu können die Passeinsätze mit entsprechenden Aussparungen versehen sein, die mit diesen Führungselementen zusammenwirken können.

Des Weiteren kann vorgesehen sein, dass der Aufnahmeraum nach oben durch einen, insbesondere plattenförmigen, Träger begrenzt ist, an dem die in den Aufnahmeraum eingebrachten Passeinsätze befestigbar sind oder an dem ein Produktschutzelement, wie vorstehend erläutert, befestigbar ist.

Der Träger kann an dem Siegelwerkzeug oder an einem das Siegelwerkzeug enthaltenden Gehäuse des Oberteils befestigt sein. Bei einer Gehäusebefestigung können die hierfür vorgesehenen Befestigungselemente durch das Siegelwerkzeug und gegebenenfalls weitere oberhalb des Siegelwerkzeugs, aber innerhalb des Gehäuses gelegene Bauteile der Siegelstation hindurchgeführt sein.

Der Träger kann aus einem thermisch isolierenden oder aus einem thermisch leitfähigen Material hergestellt sein. Die diesbezügliche Ausgestaltung des Trägers hängt von den weiteren Gegebenheiten in einer jeweiligen Siegelstation ab. In manchen Anwendungen kann es z.B. erwünscht sein, dass der Träger eine oder mehrere eingebrachte Passeinsätze oder ein Produktschutzelement gegenüber dem Siegelwerkzeug thermisch isolieren kann. In anderen Fällen kann es beispielsweise erwünscht sein, dass der Träger Wärme aus dem Aufnahmeraum möglichst effizient abführen kann, um auf diese Weise eine übermäßige Erwärmung eingebrachter Passeinsätze oder eines Produktschutzelementes zu verhindern.

In manchen Ausführungsbeispielen kann vorgesehen sein, dass für den Träger, für die Passeinsätze und/oder für ein Produktschutzelement, wie vorstehend erläutert, ein aktives Kühlsystem vorgesehen ist.

Generell gilt für alle Ausführungsbeispiele der Erfindung, dass als Material für die Passeinsätze z.B. Aluminium oder Edelstahl verwendet wird. Die Passeinsätze können jeweils mit einer Beschichtung versehen sein, z.B. aus Teflon oder durch ein Eloxal-Verfahren.

Ferner kann vorgesehen sein, die Passeinsätze aktiv zu kühlen, zum Beispiel mittels eines Kühlfluids, z.B. Wasser, von den Trägern. In diesem Fall bestehen die Passeinsätze bevorzugt aus Aluminium.

Die vorstehenden Ausführungen gelten genauso für das Material der Produktschutzelemente.

In einigen Ausführungsbeispielen der Erfindung ist der Packungsraum für den Produktbereich einer jeweiligen Packung ausschließlich oder im Wesentlichen oberhalb der Siegelebene gelegen. Dabei ist insbesondere vorgesehen, dass entweder im Unterteil keine zur Aufnahme eines Produktbereichs einer jeweiligen Packung geeignete Vertiefung ausgebildet ist oder eine im Unterteil ausgebildete Vertiefung vollständig oder im Wesentlichen vollständig durch einen oder mehrere Fülleinsätze aufgefüllt ist.

Die Siegelstation kann zum Verschließen von Packungen ausgebildet sein, die keine vorgeformten, insbesondere durch Tiefziehen gebildeten, Bestandteile oder vorgefertigten Trays oder Schalen, sondern jeweils zumindest eine Oberfolie und eine Unterfolie als miteinander zu verbindende Packungsbestandteile umfassen, zwischen denen sich der Produktbereich befindet. Insbesondere kann die Siegelstation zum Verschließen von Mehrlagenpackungen ausgebildet sein, die jeweils eine Unterfolie, eine Oberfolie und wenigstens eine dazwischen liegende Mittelfolie umfassen, wobei die Unterfolie mit der Mittelfolie eine untere Produktlage und die Oberfolie mit der oder einer weiteren Mittelfolie eine obere Produktlage einschließt, wobei die Produktlagen zusammen den Produktbereich der zu verschließenden Mehrlagenpackung bilden.

Die Erfindung betrifft außerdem eine Verpackungsmaschine, insbesondere für Lebensmittelprodukte, mit zumindest einer Siegelstation der hierin offenbarten Art.

Des Weiteren betrifft die Erfindung ein Verfahren zum Anpassen einer Siegelstation an mit dieser zu verschließende Packungen, insbesondere einer Siegelstation der hierin offenbarten Art, mit den Merkmalen des Anspruchs 13.

Die Erfindung wird im Folgenden beispielhaft unter Bezugnahme auf die Zeichnung beschrieben. Es zeigen:
- Fig. 1: schematisch in einer Seitenansicht eine Verpackungsmaschine, die mit einer erfindungsgemäßen Siegelstation ausgestattet werden kann,
- Fig. 2: schematisch einen Querschnitt durch eine erfindungsgemäße Siegelstation in Höhe der Siegelebene,
- Fig. 2a: schematisch eine mögliche Ausführungsform einer Einlagenpackung,
- Fig. 2b: eine mögliche Ausführungsform einer Mehrlagenpackung,
- Fig. 3: einen Schnitt senkrecht zur Siegelebene durch eine Siegelstation gemäß dem Stand der Technik,
- Fig. 4: einen Schnitt senkrecht zur Siegelebene durch eine Siegelstation gemäß einem Ausführungsbeispiel der Erfindung,
- Fig. 5: einen Schnitt senkrecht zur Siegelebene durch eine Siegelstation gemäß einem weiteren Ausführungsbeispiel der Erfindung, und
- Fig. 6a, 6b: jeweils einen Schnitt senkrecht zur Siegelebene durch eine Siegelstation gemäß einem weiteren Ausführungsbeispiel der Erfindung, und zwar ohne zu verschließende Packung (Fig. 6a) und mit zu verschließender Packung (Fig. 6b).

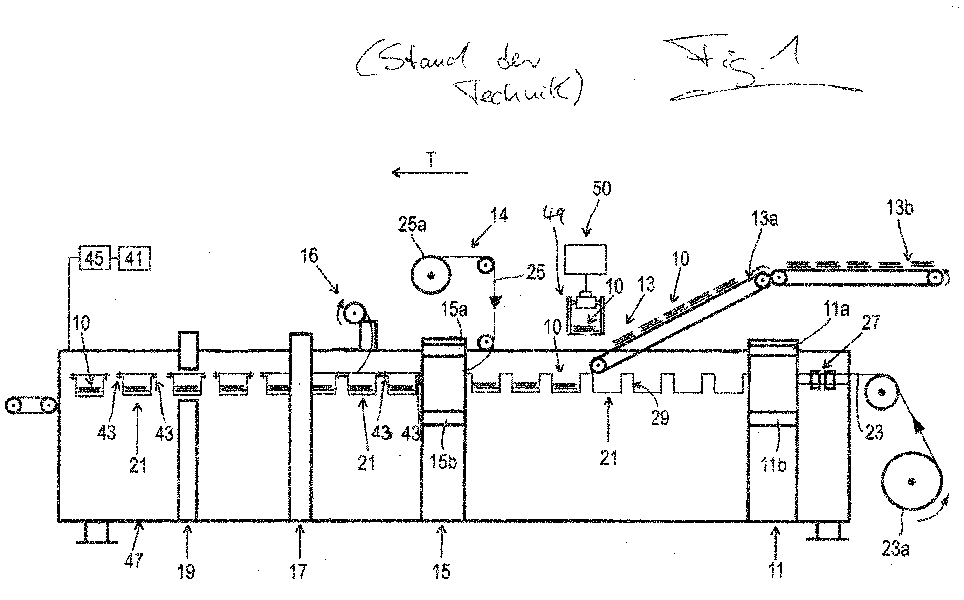

Die in Fig. 1 dargestellte, in einer Transportrichtung T arbeitende Verpackungsmaschine umfasst ein Maschinengestell 47. An einem linken Seitenrahmen und an einem rechten Seitenrahmen des Maschinengestells 47 ist jeweils eine hier nur schematisch am stromaufwärts gelegenen Ende der Maschine dargestellte Transportkette 27 geführt. Die beiden Transportketten 27 bilden gemeinsam eine Transporteinrichtung für eine von einer Vorratsrolle 23a abgezogene Unterfolie 23.

Die hier dargestellte Maschine umfasst eine Mehrzahl von in Transportrichtung T aufeinander folgenden Arbeitsstationen, nämlich eine auch als Tiefzieher oder Thermoformer bezeichnete Formstation 11, eine Einbringstation 13 für zu verpackende Produkte 10, eine Zufuhrstation 14 für eine von einer Vorratsrolle 25a abgezogene Oberfolie 25, eine Siegelstation 15, eine Etikettierstation 16, eine Quertrennstation 17 sowie eine Längstrennstation 19.

Bei den zu verpackenden Produkten 10 handelt es sich insbesondere um Lebensmittelprodukte, hier in Form von sogenannten Portionen, die jeweils mehrere Scheiben umfassen, welche zuvor mittels eines Lebensmittelslicers (nicht dargestellt) von einem laib- oder riegelförmigen Lebensmittel, wie z.B. Wurst, Käse, Schinken oder Fleisch, abgetrennt wurden.

Den Betrieb der Verpackungsmaschine einschließlich der erwähnten Arbeitsstationen steuert eine zentrale Steuereinrichtung 41, die außerdem weitere Aufgaben wie beispielsweise eine Regelung bestimmter zusätzlicher Vorgänge an den Arbeitsstationen wahrnehmen kann, worauf an dieser Stelle nicht näher eingegangen wird. Zudem ist die Verpackungsmaschine mit einer Bedieneinrichtung 45 versehen, die z.B. einen Touchscreen umfasst, an welchem einem Bediener alle erforderlichen Informationen angezeigt werden können und der Bediener alle notwendigen Einstellungen vor und während des Betriebs der Maschine vornehmen kann.

Der Aufbau und die Funktionsweise der vorstehend genannten Arbeitsstationen sind dem Fachmann grundsätzlich bekannt, so dass hierauf nicht im Detail eingegangen wird. Wie im Einleitungsteil erwähnt, ist die erfindungsgemäße Siegelstation insbesondere zum Verschließen solcher Packungen geeignet, bei denen sich die verpackten Produkte nicht in geformten Vertiefungen oder Trays bzw. Schalen befinden, sondern jeweils zwischen zwei Folienbahnen, um eine einlagige oder mehrlagige Packung zu bilden, bei welcher die Unterfolie in einer zumindest im Wesentlichen ebenen Konfiguration vorliegt und in dieser Konfiguration an der Siegelstation verschlossen wird. Eine für eine solche Anwendung vorgesehene Verpackungsmaschine besitzt dann - anders als in Fig. 1 dargestellt - keine Formstation 11. Gleichwohl kann die an der in Fig. 1 dargestellten Verpackungsmaschine vorgesehene Siegelstation 15 in erfindungsgemäßer Weise ausgebildet sein, da - wie ebenfalls einleitend erwähnt - die Erfindung auch zum Verschließen solcher Packungen geeignet ist, bei denen durch einen vorhergehenden Tiefziehprozess in der Unterfolie 23 Vertiefungen 29 ausgebildet worden sind, wie es in Fig. 1 schematisch dargestellt ist.

Bei der Verpackungsmaschine gemäß Fig. 1 werden an der ein Oberwerkzeug 11a und ein Unterwerkzeug 11b umfassenden Formstation 11 die jeweils in einem Tiefziehprozess in der Unterfolie 23 auch als Mulden bezeichneten Vertiefungen 29 ausgebildet. In diese Vertiefungen 29 werden an der Einbringstation 13 die erwähnten Portionen 10 eingelegt. Die Einbringstation 13 umfasst hier einen sogenannten Einleger, von dem zwei Endlosförderbänder 13a, 13b dargestellt sind. Alternativ oder zusätzlich kann die Einbringstation 13 einen hier ebenfalls schematisch dargestellten Roboter 50 umfassen, z.B. in Form eines sogenannten "Picker", der als Delta-Roboter mit einem Greifer 49, der zwei jeweils eine Portion 10 gemeinsam haltende Schaufeln umfasst, ausgebildet sein kann.

Anschließend werden die mit den gefüllten Vertiefungen 29 versehene Unterfolie 23 und die Oberfolie 25 der Siegelstation 15 zugeführt, die ein Oberwerkzeug 15a (Oberteil) und ein Unterwerkzeug 15b (Unterteil) umfasst. Wenn die Produkte 10 nicht in geformte Vertiefungen einer Unterfolie gelegt werden sollen, sondern eine Unterfolie ohne geformte Vertiefungen verwendet werden soll, dann werden die Produkte 10 an der Einbringstation 13 einfach auf die in einer ebenen Konfiguration vorliegende Unterfolie 23 aufgelegt. Nach dem Verschließen der jeweiligen Packungen durch die Siegelstation 15 liegt dann eine sogenannte Einlagenpackung vor. Soll eine Mehrlagenpackung hergestellt werden, wird nach dem Auflegen eines Produktes 10 auf die Unterfolie 23 vor dem Zuführen der Oberfolie 25 noch eine Mittelfolie (nicht dargestellt) aufgebracht, auf die dann jeweils im Bereich eines bereits zwischen Unterfolie 23 und Mittelfolie befindlichen Produktes ein weiteres Produkt gelegt wird, bevor anschließend die Oberfolie 25 zugeführt wird. Auf diese Weise werden dann an der Siegelstation 15 Mehrlagenpackungen jeweils mit Oberfolie, Mittelfolie und Unterfolie verschlossen.

Mittels der Werkzeuge 15a, 15b der Siegelstation 15 werden hier die Oberfolie 25 und die Unterfolie 23, gegebenenfalls außerdem wie erläutert eine oder mehrere Mittelfolien, miteinander verbunden.

In dem dargestellten Ausführungsbeispiel werden hierdurch die Vertiefungen 29 und somit die von Oberfolie 25 und Unterfolie 23 gebildeten Packungen 21 verschlossen. In Fig. 1 sind quer zur Transportrichtung T verlaufende, auch als Siegelnähte bezeichnete Siegelstellen 43 schematisch angedeutet, an denen durch Einwirken von Oberwerkzeug 15a und Unterwerkzeug 15b die beiden Folien 23, 25 durch Beaufschlagen mit Wärme und Druck miteinander verbunden worden sind.

Im Anschluss an die Siegelstation 15 hängen die Packungen 21 noch durch die Oberfolie 25 und die Unterfolie 23 zusammen, müssen also noch vereinzelt werden. Bei dem hier dargestellten Ausführungsbeispiel werden die Packungen 21 vor dem Vereinzeln an der Etikettierstation 16 mit Etiketten versehen. Alternativ können eine oder mehrere Etikettierstationen 16 stromabwärts der erwähnten Trennstationen 17, 19 positioniert sein. Des Weiteren können eine oder mehrere Arbeitsstationen vorgesehen sein, an denen die Packungen 21 mit einer oder mehreren Bedruckungen versehen werden.

Stromabwärts der Trennstation 17, 19 können weitere Arbeitsstationen vorgesehen sein, beispielsweise eine Waage zur Gewichtskontrolle der Packungen 21.

Die wie vorstehend aufgebaute Verpackungsmaschine stellt lediglich ein mögliches Beispiel für eine Verpackungsmaschine dar, in welche eine erfindungsgemä-ße Siegelstation integriert sein kann.

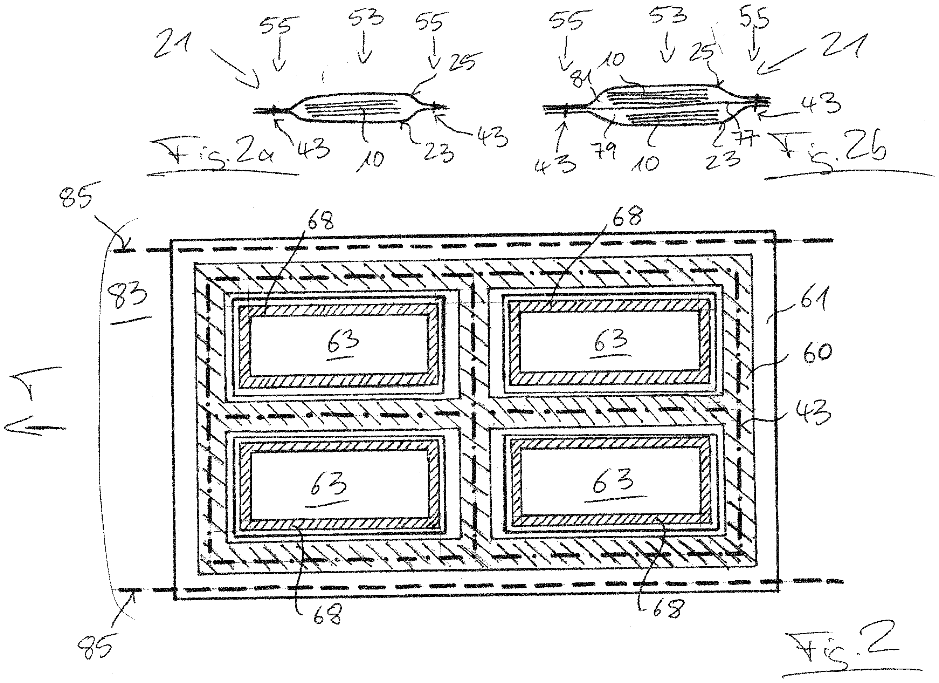

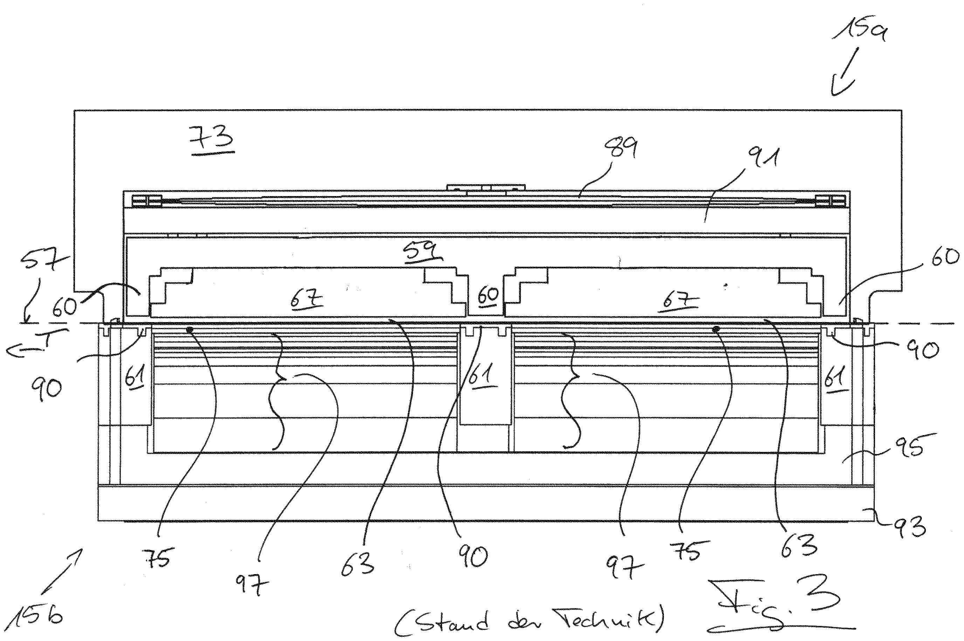

Bevor anhand von Fig. 3 ein möglicher Aufbau einer herkömmlichen Siegelstation erläutert wird, soll anhand von Fig. 2 aufgezeigt werden, dass auch an einer erfindungsgemäßen Siegelstation 15 mehrere Packungen 21, die jeweils ein oder mehrere Produkte 10 enthalten, gleichzeitig verschlossen werden können. In Fig. 2 sind nicht die Packungen 21 und Produkte 10, sondern die Packungsräume 63 dargestellt, die jeweils zur Aufnahme eines Produktbereiches 53 einer jeweiligen Packung 21 vorgesehen sind.

Typischerweise werden in einer Verpackungsmaschine der hier interessierenden Art quer zur Transportrichtung T mehrere - hier zwei - Packungen 21 nebeneinander verschlossen. Die Anzahl der nebeneinander liegenden Packungen 21 kann auch größer sein. Dies hängt von der Breite der jeweiligen Materialbahnen 83, also beispielsweise der Unterfolie 23 und der Oberfolie 25 (vgl. Fig. 1), sowie von der Größe der Produkte 10 und somit von der Größe der jeweils gewünschten Packungen 21 ab.

Auch können - wie Fig. 2 auch zeigt - mehrere Packungen 21 hintereinander, in Transportrichtung T gesehen, gleichzeitig verschlossen werden. Auch dies hängt letztlich von der Größe der Produkte 10 bzw. der Packungen 21 ab. Hierzu ist zu bemerken, dass Verpackungsmaschinen der hier interessierenden Art typischerweise taktweise betrieben werden. Mittels der anhand von Fig. 1 erläuterten Transporteinrichtung 27 für die Unterfolie 23 wird pro Arbeitstakt der Verpackungsmaschine die Unterfolie 23 um eine vorgegebene Vorzuglänge weitertransportiert, woraufhin der Vorzug für eine bestimmte Zeitspanne ruht, in welcher an den jeweiligen Arbeitsstationen die einzelnen Arbeitsabläufe durchgeführt werden, d.h. z.B. bei Vorhandensein einer Tiefziehstation 11 die Vertiefungen 29 geformt (vgl. Fig. 1) und an der Siegelstation 15 die Packungen 21 verschlossen werden.

In dem in Fig. 2 schematisch dargestellten Beispiel beträgt die Vorzuglänge zwei Packungen 21 und liegen quer zur Transportrichtung T zwei Packungen 21 nebeneinander, so dass in jedem Arbeitstakt die Siegelstation 15 ein 2 x 2-Packungsformat verschließen kann.

Ein zum Unterteil 15b der Siegelstation 15 gehörendes Gegenwerkzeug 61 weist eine der Anzahl der gleichzeitig zu verschließenden Packungen 21 entsprechende Anzahl von Öffnungen auf, die mit den einzelnen Packungsräumen 63 für die Produktbereiche 53 der Packungen 21 ausgerichtet sind. Das Gegenwerkzeug 61 wird deshalb auch als Siegelbrille bezeichnet. Auf dem Gegenwerkzeug 61 liegen die Materialbahnen 83 (z.B. Unterfolie 23, Mittelfolie 77 und Oberfolie 25) auf, die folglich jeweils mit ihrem Rand 85 nicht bis zum Rand des Gegenwerkzeugs 61 reichen.

Randbereiche 55 der Packungen 21, die um einen jeweiligen Produktbereich 53 der betreffenden Packung 21 herum verlaufen, liegen zwischen diesem Gegenwerkzeug 61 des Unterteils 15b und einem Siegelwerkzeug 59, von dem in der schematischen Fig. 2 lediglich die Umrisse der dem Gegenwerkzeug 61 zugewandten Unterseiten von Seitenwänden 60 des Siegelwerkzeugs 59 dargestellt sind.

Wenn zum Verschließen der Packungen 21 das Siegelwerkzeug 59 mit den erwähnten Unterseiten seiner Seitenwände 60 unter Zwischenlage der erwähnten Randbereiche 55 der Packungen 21 gegen das Gegenwerkzeug 61 gepresst wird, dann werden diese Randbereiche 55 mit Wärme und Druck beaufschlagt, um so die Packungen 21 durch Siegeln zu verschließen. Hierdurch entstehen in den Randbereichen 55 die in Fig. 2 durch strichpunktierte Linien dargestellten Siegelnähte 43.

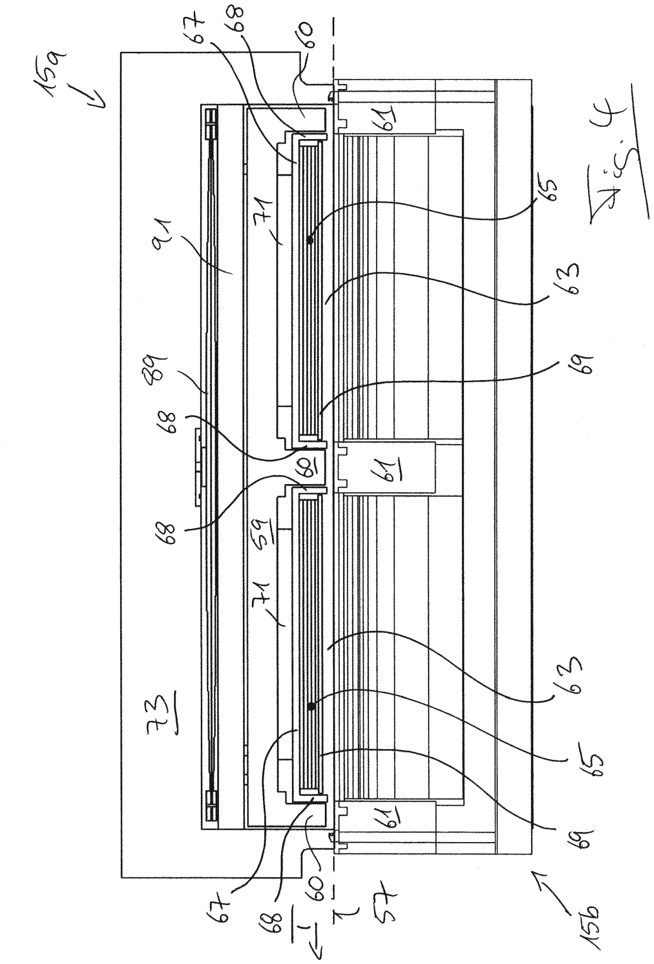

Fig. 2 verdeutlicht außerdem die Lage von Seitenwänden 68 eines Produktschutzelements 67, auf welches nachstehend u.a. in Verbindung mit dem Ausführungsbeispiel der Fig. 4 näher eingegangen wird. Diese Seitenwände 68 sind gegenüber den erwähnten Seitenwänden 60 des Siegelwerkzeugs 59 jeweils nach innen versetzt und dienen mit ihren Unterseiten als Niederhalter für die jeweilige Packung 21 im jeweiligen Randbereich 55 oder in einem Übergangsbereich zwischen Produktbereich 53 und Randbereich 55 (vgl. auch Fig. 2a und 2b) der jeweiligen Packung 21.

Die jeweils in einem Packungsraum 63 befindlichen Produktbereiche 53 sind so jeweils von den Seitenwänden 68 des Produktschutzelements 67 umgeben und auf diese Weise gegenüber dem Siegelwerkzeug 59 zusätzlich abgeschirmt.

Die Fig. 2a und 2b veranschaulichen - jeweils schematisch - eine Einlagenpackung (Fig. 2a) und eine Mehrlagenpackung (Fig. 2b), die jeweils einen Produktbereich 53 und einen umlaufenden Randbereich 55 aufweisen, in welchem Siegelnähte 43 ausgebildet sind, die mittels einer erfindungsgemäßen Siegelstation hergestellt worden sind. Bei der Mehrlagenpackung gemäß Fig. 2b ist zusätzlich zur Unterfolie 23 und zur Oberfolie 25 eine Mittelfolie 77 vorgesehen, so dass zwei übereinander liegende Produktlagen 79, 81 vorgesehen sind, die zusammen den Produktbereich 53 bilden und jeweils ein auf diese Weise verpacktes Produkt 10 enthalten.

Fig. 3 zeigt das Oberteil 15a und das Unterteil 15b einer Siegelstation gemäß dem Stand der Technik, wobei das Unterteil 15b nachstehend näher beschrieben wird. Die anschließend erwähnten und insbesondere anhand der Fig. 4 bis 6 beschriebenen möglichen Ausführungsbeispiele einer erfindungsgemäßen Siegelstation unterscheiden sich von der bekannten Siegelstation gemäß Fig. 3 nur hinsichtlich der Ausgestaltung des Oberteils 15a, weshalb bei der Erläuterung der erfindungsgemäßen Siegelstationen auf den Aufbau des Unterteils 15b nicht noch einmal im Detail eingegangen wird.

Das Unterteil 15b umfasst eine Grundplatte 93, die eine Vakuumform 95 sowie ein Gegenwerkzeug 61 ("Siegelbrille", vgl. Fig. 2) trägt, von dem hier nur die quer zur Transportrichtung T der Verpackungsmaschine, in welche die Siegelstation während des Betriebs integriert ist (vgl. Fig. 1), verlaufenden Bestandteile dargestellt sind.

Die Siegelstation kann beispielsweise entsprechend Fig. 2 dazu ausgebildet sein, gleichzeitig vier Packungen 21 zu verschließen, wobei Fig. 3 einen Vertikalschnitt durch zwei in Transportrichtung T aufeinanderfolgende Arbeitsbereiche zeigt, in denen jeweils eine der Packungen 21 eines 2 x 2-Packungsformats (vgl. Fig. 2) verschlossen wird.

In diesen Arbeitsbereichen ist jeweils am Unterteil 15b der betreffende Raum zwischen den Bestandteilen des Gegenwerkzeugs 61 mit einer Mehrzahl von übereinander liegenden Formbegrenzungsplatten 97 aufgefüllt. Der von der obersten dieser Formbegrenzungsplatten 97 bis zur - die Siegelebene 57 definierenden - Oberseite des Unterteils 15b vorhandene Raum kann mit plattenförmige Fülleinsätzen 75 (in Fig. 3 mit einem Fülleinsatz 75) aufgefüllt sein, so dass jeweils unterhalb der Siegelebene 57 entweder kein Freiraum oder (wie in Fig. 3) ein Freiraum mit durch Dicke und Anzahl der Fülleinsätze 75 vorgebbarer Höhe vorhanden ist. Gemäß Fig. 3 liegt also die hier nicht dargestellte Unterfolie auf den die Siegelebene 57 definierenden Oberseiten von Dichtungen 90 auf, die von den Bestandteilen des Gegenwerkzeugs 61 getragen sind.

Der Fülleinsatz 75 kann entfernt werden, um auf diese Weise im Unterteil 15b unterhalb der Siegelebene 57 jeweils einen größeren Raum für die betreffende Packung zur Verfügung zu stellen. Es ist auch möglich, eine oder mehrere der Formbegrenzungsplatten 97 zu entfernen, um auf diese Weise den Raum unterhalb der Siegelebene 57 zu vergrößern und so Packungen mit geformten Vertiefungen oder Trays bzw. Schalen mit größerer Höhe aufnehmen zu können, wie dies an anderer Stelle bereits beschrieben worden ist (vgl. auch Fig. 1).

Das Oberteil 15a umfasst ein nach unten zum Unterteil 15b hin offenes Gehäuse 73, durch welches das Oberteil 15a an den Seiten und oben geschlossen ist. Ein beheizbares Siegelwerkzeug 59 mit nach unten zur Siegelebene 57 hin vorstehenden Seitenwänden 60 ist in vertikaler Richtung bewegbar am Gehäuse 73 angebracht. Mittels einer Antriebseinrichtung 91, beispielsweise mittels eines aufblasbaren Schlauchs oder Kissens, kann das Siegelwerkzeug 59 nach unten auf das Gegenwerkzeug 61 zu bewegt werden, und zwar gegen die Rückstellkraft einer Rückstelleinrichtung 89 beispielsweise in Form einer Federanordnung.

Das Oberteil 15a mit dem Siegelwerkzeug 59 und das Unterteil 15b mit dem Gegenwerkzeug 61 bilden somit mehrere - in diesem Ausführungsbeispiel vier (vgl. Fig. 2) - Kammern, die jeweils zur Aufnahme einer zu verschließenden Packung dienen. Zum Öffnen und Schließen dieser Kammern können Oberteil 15a und Unterteil 15b senkrecht zur Siegelebene 57 und somit in vertikaler Richtung relativ zueinander bewegt werden. In Fig. 3 sind die Kammern geschlossen, d.h. die Siegelstation ist im geschlossenen Zustand dargestellt, in welchem das Gehäuse 73 des Oberteils 15a und das Gegenwerkzeug 61 des Unterteils 15b unter Zwischenlage der Folienbahnen (vgl. Fig. 2, dort die Materialbahnen 83) gegeneinander bewegt sind.

Bei geschlossener Siegelstation kann mittels des erwähnten Antriebs 91 das Siegelwerkzeug 59 beaufschlagt und mit den Unterseiten seiner Seitenwände 60 unter Zwischenlage der nicht dargestellten Randbereiche der einzelnen zu verschließenden Packungen gegen das Gegenwerkzeug 61 gepresst werden. Fig. 3 zeigt nicht diesen aktiven Zustand, in welchem die Randbereiche mit Wärme und Druck beaufschlagt werden, um auf diese Weise den Siegelvorgang auszuführen, sondern den passiven, angehobenen Zustand des Siegelwerkzeugs 59. Es ist folglich zwischen Siegelwerkzeug 59 und Gegenwerkzeug 61 ein vertikaler Zwischenraum vorhanden, der größer ist als die Dicke der Randbereiche der zu verschließenden Packungen.

Ebenso ist ein vertikaler Zwischenraum zwischen der Unterseite eines Produktschutzelements 67 und der Oberseite des obersten Fülleinsatzes 75 des Unterteils 15b vorhanden, wobei dieser vertikale Zwischenraum während des Betriebs der Siegelstation unveränderlich und insbesondere unabhängig von der vertikalen Stellung des Siegelwerkzeugs 59 ist, welches also relativ zum in vertikaler Richtung fest an einem Träger 71 und somit am Gehäuse 73 angebrachten Produktschutzelement 67 auf- und abbewegt werden kann. Dieser vertikale Zwischenraum bildet einen Packungsraum 63, der für den oberhalb der Siegelebene 57 liegenden Teil der jeweils zu verschließenden Packung zur Verfügung steht. Dieser Packungsraum 63 ist oberhalb der Siegelebene 57 unveränderbar, da das jeweilige Produktschutzelement 67 über den Träger 71 mit dem Gehäuse 73 des Oberteils 15a fest verbunden ist. Die vertikale Höhe des Packungsraumes 63 ist somit bei einer solchen aus dem Stand der Technik bekannten Siegelstation ein fester, unveränderlicher Parameter des Oberteils 15a. Eine Anpassung an die jeweils zu verschließenden Packungen ist somit am Oberteil 15a nicht oder allenfalls mit erheblichem Umrüstaufwand möglich. Dies bedeutet, dass für variierende Produkte und Packungen viele spezielle Teile für das Oberteil 15a der Siegelstation gefertigt und vorgehalten werden.

Anders ist dies bei den Oberteilen 15a der in den Fig. 4, 5 und 6a, 6b dargestellten Ausführungsbeispielen einer erfindungsgemäßen Siegelstation.

Im Ausführungsbeispiel der Fig. 4 ist jeweils ein über einen Träger 71 fest mit dem Siegelwerkzeug 59 verbundenes Produktschutzelement 67 vorgesehen, das hier haubenförmig mit zur Siegelebene 57 hin vorstehenden Seitenwänden 68 ausgebildet ist, die in unmittelbarer Nähe der Seitenwände 60 des Siegelwerkzeugs 59 verlaufen (vgl. auch Fig. 2). Die Produktschutzhaube 67 umfasst zusätzlich ein Abschlusselement 69, das in der Schutzhaube 67 angeordnet und relativ zur Schutzhaube 67 in der Höhe verstellbar und in einer jeweils gewünschten Höhe fixierbar ist. Die Höhe, in welcher das Abschlusselement 69 fixiert werden kann, und somit die vertikale Höhe des Packungsraumes zwischen Unterseite des Abschlusselementes 69 und der Siegelebene 57 ist von der Gesamthöhe von in die Schutzhaube 67 eingebrachten, hier jeweils plattenförmig ausgebildeten Passeinsätzen 65 abhängig. Aus einem vorgegebenen Satz von Passeinsätzen 65 gleicher oder unterschiedlicher Höhe kann ein Bediener vor Inbetriebnahme der Siegelstation einen oder mehrere bestimmte Passeinsätze 65 auswählen, so dass deren Gesamthöhe die jeweils gewünschte Höhe des Packungsraumes 63 ergibt. Es ist auch möglich, keinen Passeinsatz 65 einzubringen und das Abschlusselement 69 in einem maximalen Abstand von der Siegelebene 57 an der Schutzhaube 67 zu fixieren. In einem möglichen Ausführungsbeispiel kann auf diese Weise die Differenz zwischen der minimalen Höhe und der maximalen Höhe des Packungsraumes 63 zum Beispiel 35 mm betragen. Die Höhe der Passeinsätze 65 kann beispielsweise zwischen einem halben Millimeter und einigen wenigen Millimetern liegen. Wie im Einleitungsteil bereits erwähnt, können zumindest einige Passeinsätze unterschiedliche Höhen aufweisen. Es ist auch möglich, ausschließlich Passeinsätze von gleicher Höhe zu verwenden, beispielsweise mit einer Höhe von jeweils einem Millimeter.

Da die Höhenlage der Schutzhaube 67 relativ zur Siegelebene 57 fest eingestellt ist, ist die Lage der Unterseiten der Seitenwände 68 der Schutzhaube 67 relativ zur Siegelebene 57 ebenfalls unveränderlich. Die Seitenwände 68 der Schutzhaube 67 können folglich unabhängig von der Höhe des Packungsraumes 63 stets in gleicher Weise als Niederhalter für einen Randbereich oder für einen Übergang zwischen Randbereich und Produktbereich einer jeweiligen zu verschließenden Packung dienen. Der Packungsraum 63 dagegen kann durch entsprechende Auswahl eines oder mehrerer Passeinsätze 65 und entsprechende Höheneinstellung des Abschlusselements 69, wie erläutert, an die Höhe einer jeweiligen Packung angepasst werden.

Die Träger 71 sind - unter Hindurchführung entsprechender Befestigungselemente durch das Siegelwerkzeug 59, die Antriebseinrichtung 91 und die Rückstelleinrichtung 89 hindurch - am Gehäuse 73 befestigt, so dass die Träger 71 in einer festen Höhe relativ zur Siegelebene 57 angeordnet sind. Insbesondere sind die Träger 71 jeweils starr am Gehäuse 73 befestigt. Die Schutzhauben 67 wiederum sind am jeweiligen Träger 71 befestigt. Eine Befestigung der Passeinsätze 65 ist möglich, aber nicht zwingend erforderlich, da ein einzelner Passeinsatz 65 oder ein Stapel aus mehreren Passeinsätzen durch das in entsprechender Höhe an der Schutzhaube 67 fixierte Abschlusselement 69 zusammengehalten werden kann. Das Siegelwerkzeug 59 ist relativ zum Träger 71 und zur Schutzhaube 67 zwischen der dargestellten passiven angehobenen Stellung und der abgesenkten aktiven Stellung auf- und abbewegbar.

Wie ebenfalls bereits im Einleitungsteil erwähnt, können die Träger 71 jeweils aus einem thermisch isolierenden Material oder einem thermisch leitfähigen Material bestehen. Alternativ oder zusätzlich ist es jeweils möglich, ein aktives Kühlsystem (nicht dargestellt) für die Träger 71 und auch für die Passeinsätze vorzusehen. Diese möglichen Ausgestaltungen der Träger 71 gelten auch für die nachstehend beschriebenen Ausführungsbeispiele.

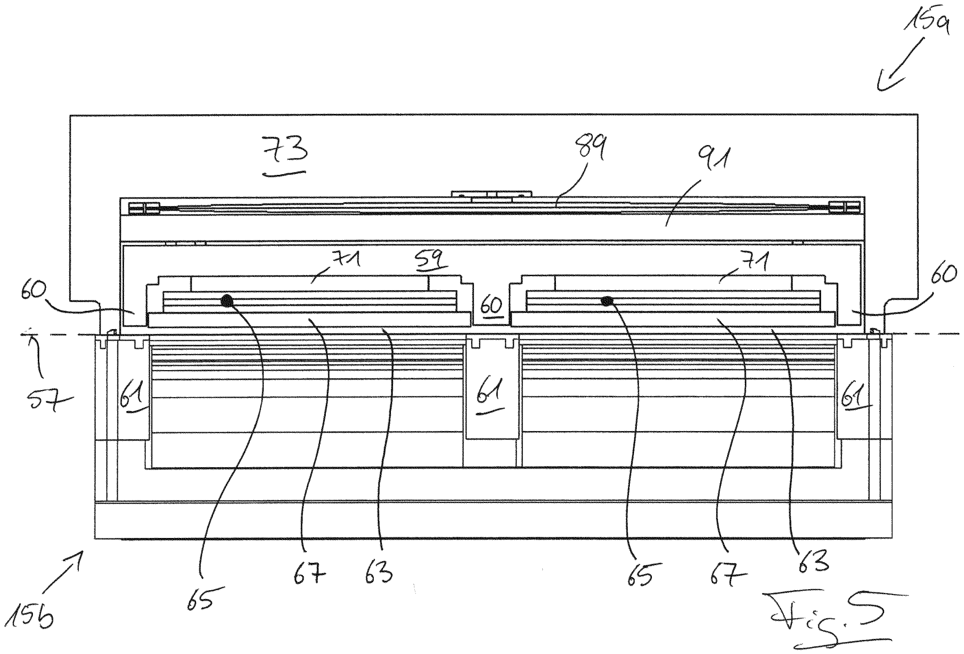

Im Ausführungsbeispiel der Fig. 5 ist jeweils ein plattenförmiges Produktschutzelement 67 vorgesehen. Eine für eine jeweilige Anwendung geeignete Anzahl von Passeinsätzen 65 kann der Bediener hier jeweils zwischen Träger 71 und Produktschutzplatte 67 einbringen. Die Befestigung sowohl der Passeinsätze 65 als auch der Produktschutzplatte 67 erfolgt am jeweiligen Träger 71, der wiederum fest mit dem Gehäuse 73 verbunden ist. Das Siegelwerkzeug 59 ist wiederum relativ zum Träger 71 und zur Produktschutzplatte 67 zwischen der dargestellten passiven angehobenen Stellung und der abgesenkten aktiven Stellung auf- und abbewegbar. Die Produktschutzplatte 67 dient mit ihrer gesamten Unterseite auch als Niederhalter für den gesamten innerhalb der Seitenwände 60 des Siegelwerkzeugs 59 gelegenen Bereich der jeweiligen Packung.

Die vertikale Lage der Produktschutzplatte 67 relativ zur Siegelebene 57 ist folglich nicht unveränderlich, sondern von der Gesamthöhe der Passeinsätze 65 abhängig. Der vertikale Abstand zwischen der Unterseite der Produktschutzplatte 67 und der Siegelebene 57 und somit die vertikale Höhe des Packungsraumes 63 kann beispielsweise zwischen 0 mm und 35 mm variieren.

Gemäß einem nicht dargestellten Ausführungsbeispiel können die Konzepte der Fig. 4 und 5 derart miteinander kombiniert werden, dass jeweils ein haubenförmiges Produktschutzelement 67 gemäß Fig. 4 vorgesehen ist, bei dem aber Passeinsätze 65 nicht nur unterhalb der Produktschutzhaube 67 eingebracht, sondern auch zwischen Träger 71 und Produktschutzhaube 67 entsprechend dem Konzept der Fig. 5 positioniert werden können. Auf diese Weise lässt sich beispielsweise das Höhenniveau der Unterseiten der als Niederhalter dienenden Seitenwände 68 der Produktschutzhaube 67 variieren.

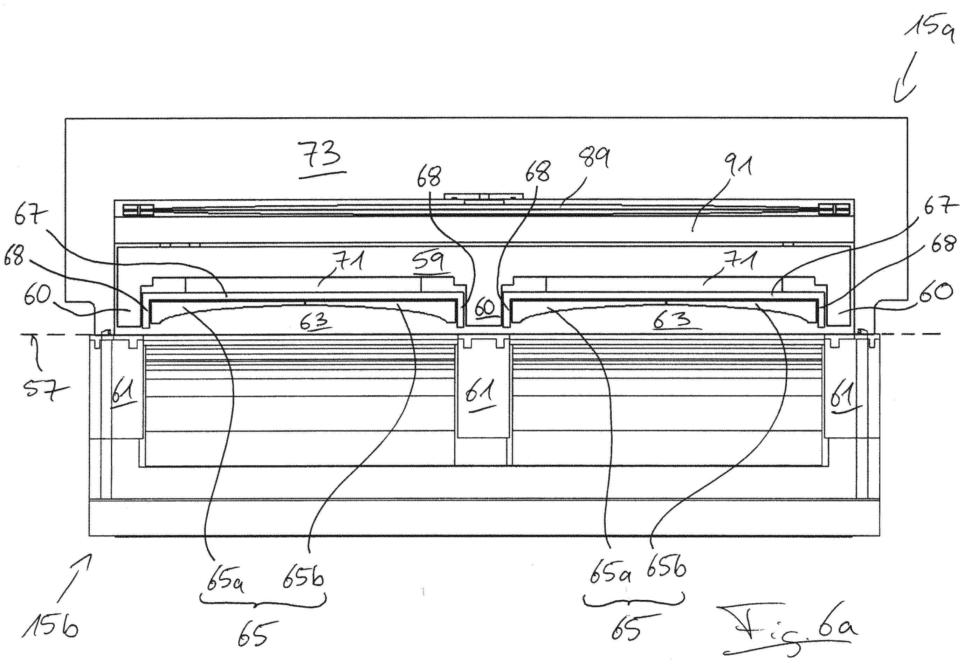

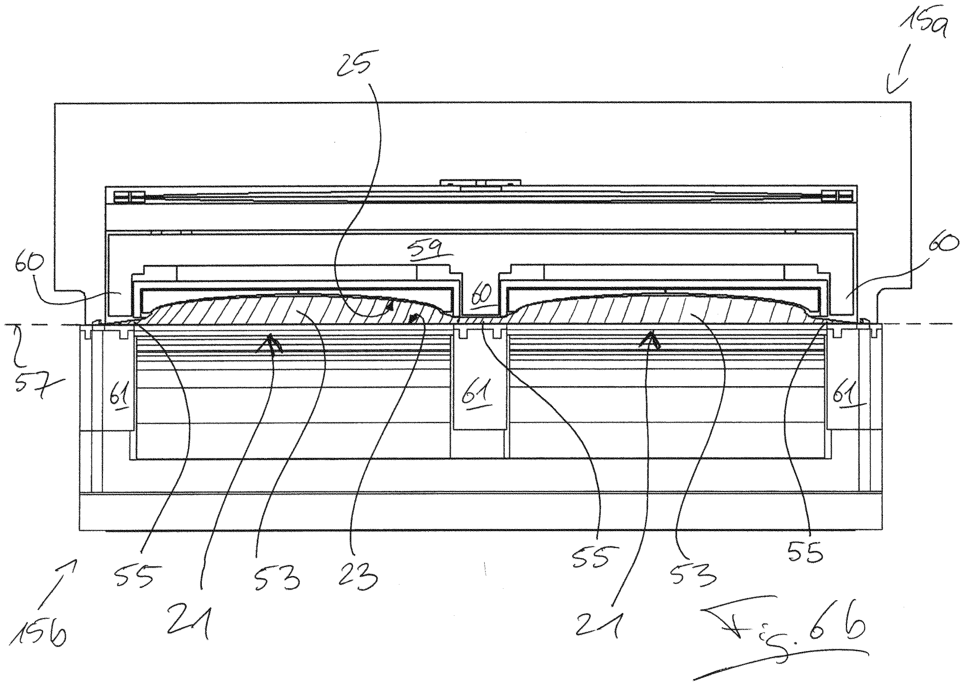

Beim Ausführungsbeispiel der Fig. 6a, 6b ist wiederum gemäß dem Konzept der Fig. 4 jeweils ein haubenförmiges Produktschutzelement 67 vorgesehen. Allerdings sind hier keine plattenförmigen Passeinsätze vorgesehen, sondern die Passeinsätze 65 sind jeweils an ihrer Unterseite konkav ausgebildet. Des Weiteren ist anders als im Ausführungsbeispiel der Fig. 4 jeweils kein Abschlusselement vorgesehen.

Die Kontur dieser konkaven Passeinsätze 65 ist grundsätzlich beliebig und kann an die Kontur des jeweiligen Produktbereiches 53 der jeweils zu verschließenden Packung angepasst werden. Des Weiteren ist den Fig. 6a, 6b zu entnehmen, dass die Passeinsätze 65 jeweils mehrteilig ausgebildet sein können. Im hier dargestellten Ausführungsbeispiel sind zwei Teile 65a, 65b dargestellt. Grundsätzlich kann ein jeweiliger Passeinsatz 65 aus einer beliebigen Anzahl von Einzelteilen bestehen. Dies kann das Einbringen in den Bereich unterhalb der jeweiligen Schutzhaube 67 erleichtern.

Auch die vorstehend in Verbindung mit den Fig. 4 und 5 erwähnten plattenförmigen Passeinsätze 65 können jeweils mehrteilig ausgebildet sein.

In Fig. 6b ist die Siegelstation von Fig. 6a dargestellt, wobei sich nunmehr im jeweiligen Packungsraum 63 (vgl. Fig. 6a) eine zu verschließende Packung 21 mit einem Produktbereich 53 und einem Randbereich 55 befindet. Die Packungen 21, also die Produktbereiche 53 und die Randbereiche 55, sind hier zur besseren Erkennbarkeit schraffiert dargestellt. Von einer Darstellung der jeweils im Produktbereich 53 enthaltenen verpackten Produkte wurde hier abgesehen.

Fig. 6b ist insbesondere zu entnehmen, dass durch die Verwendung separater, wahlweise einbringbarer Passeinsätze 65 der jeweilige Packungsraum 63 (vgl. Fig. 6a) derart an Form und Größe einer jeweiligen Packung 21 angepasst werden kann, dass der verbleibende freie Raum zwischen Passeinsatz 65 und Gegenwerkzeug 61 minimal ist.

Die Packungen 21 sind jeweils von einer Oberfolie 25 und einer Unterfolie 23 begrenzt. Wie vorstehend in Verbindung mit Fig. 1 erläutert und auch in Verbindung mit Fig. 2 erwähnt, erfolgt eine Vereinzelung der Packungen 21 erst im Anschluss an die Siegelstation 15, so dass in der Siegelstation 15 die einzelnen Packungen 21 noch durch die Folien 23, 25 zusammenhängen, wie in Fig. 6b gut zu erkennen ist.

Auch hier in Fig. 6a, 6b ist das Siegelwerkzeug 59 in der angehobenen passiven Stellung gezeigt und bewegt es sich während des Betriebs senkrecht zur Siegelebene 57 und relativ zu den Trägern 71 und zu den Produktschutzhauben 67.

Gemäß einem nicht dargestellten Ausführungsbeispiel können die Konzepte der Fig. 5 und 6 derart miteinander kombiniert werden, dass jeweils ein haubenförmiges Produktschutzelement 67 gemäß Fig. 6 vorgesehen ist, bei dem aber nicht nur jeweils mit einer konkaven Unterseite versehene Passeinsätze 65 unterhalb dieser Produktschutzhaube 67 eingebracht, sondern auch zwischen Träger 71 und Produktschutzhaube 67 entsprechend dem Konzept der Fig. 5 plattenförmige Passeinsätze 65 positioniert werden können. Auf diese Weise kann z.B. das Höhenniveau der Unterseiten der als Niederhalter dienenden Seitenwände 68 der Produktschutzhaube 67 variiert werden.

Wie an anderer Stelle erwähnt, kann sich bei allen vorstehend erwähnten Ausführungsbeispielen der Packungsraum 63 jeweils sowohl oberhalb als auch unterhalb der Siegelebene 57 erstrecken. Wie ebenfalls erwähnt, kann alternativ der Raum unterhalb der Siegelebene 57 jeweils vollständig aufgefüllt sein, so dass die Unterfolie in der Siegelebene 57 liegt und die Produktbereiche 53 sich ausschließlich oberhalb der Siegelebene 57 befinden. Eine solche Situation ist beispielhaft in Fig. 6b gezeigt, wo die schraffiert dargestellten Packungen 21 auf dem obersten Fülleinsatz 75 des Unterteils 15b aufliegen.

### Bezugszeichenliste

- 10: Produkt
- 11: Formstation
- 11a: Oberwerkzeug
- 11b: Unterwerkzeug
- 13: Einbringstation
- 13a: Förderband
- 13b: Förderband
- 14: Zufuhrstation
- 15: Siegelstation
- 15a: Oberteil
- 15b: Unterteil
- 16: Etikettierstation
- 17: Trennstation (Querrichtung)
- 19: Trennstation (Längsrichtung)
- 21: Packung
- 23: Unterfolie
- 23a: Vorratsrolle
- 25: Oberfolie
- 25a: Vorratsrolle
- 27: Transporteinrichtung (Transportkette) für Unterfolie
- 29: Vertiefung
- 41: Steuereinrichtung
- 43: Siegelnaht
- 45: Bedieneinheit
- 47: Maschinengestell
- 49: Greifer
- 50: Roboter
- 53: Produktbereich
- 55: Randbereich
- 57: Siegelebene
- 59: Siegelwerkzeug
- 60: Seitenwand des Siegelwerkzeugs
- 61: Gegenwerkzeug
- 63: Packungsraum
- 65: Passeinsatz
- 65a: Teil eines Passeinsatzes
- 65b: Teil eines Passeinsatzes
- 67: Produktschutzelement, Produktschutzplatte, Produktschutzhaube, Schutzhaube
- 68: Seitenwand des Produktschutzelementes
- 69: Abschlusselement
- 71: Träger
- 73: Gehäuse des Oberteils
- 75: Fülleinsatz
- 77: Mittelfolie
- 79: untere Produktlage
- 81: obere Produktlage
- 83: Materialbahn
- 85: Rand der Materialbahn
- 89: Rückstelleinrichtung
- 90: Dichtung
- 91: Antriebseinrichtung
- 93: Grundplatte
- 95: Vakuumform
- 97: Formbegrenzungsplatte

- T: Transportrichtung

## Patentansprüche

1. Siegelstation (15) für eine Verpackungsmaschine, insbesondere für Lebensmittelprodukte (10), zum Verschließen von Packungen (21) durch Verbinden von Packungsbestandteilen (23, 25, 77) durch Beaufschlagen mit Wärme und Druck, insbesondere durch Siegeln oder Schweißen,
wobei die Packungen (21) jeweils einen ein verpacktes Produkt (10) enthaltenden Produktbereich (53) und einen neben dem Produktbereich (53), insbesondere um den Produktbereich (53) herum, verlaufenden Randbereich (55) umfassen,
mit einem Oberteil (15a) und einem Unterteil (15b), die auf entgegengesetzten Seiten einer, bevorzugt horizontalen, Siegelebene (57) angeordnet sind, zumindest eine zur Aufnahme wenigstens einer Packung (21) vorgesehene Kammer begrenzen und zum Öffnen und Schließen der Kammer relativ zueinander senkrecht zur Siegelebene (57) bewegbar sind,
wobei das Oberteil (15a) ein beheizbares Siegelwerkzeug (59) und das Unterteil (15b) ein Gegenwerkzeug (61) umfasst, die einen innerhalb der Kammer gelegenen Aufnahmeraum für eine jeweilige Packung (21) begrenzen, wobei das Siegelwerkzeug (59) und das Gegenwerkzeug (61) bei geschlossener Kammer unter Zwischenlage eines zu beaufschlagenden Randbereiches (55) einer jeweiligen Packung (21) gegeneinander pressbar sind,
wobei der Aufnahmeraum einen zumindest teilweise oberhalb der Siegelebene (57) gelegenen Packungsraum (63) für den Produktbereich (53) einer jeweiligen Packung (21) umfasst,
wobei mehrere separate Passeinsätze (65) vorgesehen sind, und
wobei der Packungsraum (63) durch Einbringen einer Anzahl von n ≥ 0 der Passeinsätze (65) in den Aufnahmeraum hinsichtlich Größe und/oder Form an den Produktbereich (53) einer jeweiligen Packung (21) anpassbar ist,
**dadurch gekennzeichnet,**
**dass** zumindest einige Passeinsätze (65) oder alle Passeinsätze (65) plattenförmig ausgebildet sind, oder
**dass** zumindest einige Passeinsätze (65) oder alle Passeinsätze (65) jeweils an ihrer im eingebrachten Zustand der Siegelebene (57) zugewandten Unterseite konkav ausgebildet sind.

2. Siegelstation (15) nach Anspruch 1,
wobei im Aufnahmeraum oberhalb der Siegelebene (57) zumindest ein einteiliges oder mehrteiliges Produktschutzelement (67) angeordnet ist, wobei zumindest ein Passeinsatz (65) über und/oder unter das Produktschutzelement (67) in den Aufnahmeraum einbringbar ist.

3. Siegelstation (15) nach Anspruch 2,
wobei das Produktschutzelement (67) einen Randbereich aufweist und derart ausgebildet und angeordnet ist, dass es zumindest in der Nähe eines Bereiches, an dem das Siegelwerkzeug (59) und das Gegenwerkzeug (61) zum Beaufschlagen eines Randbereiches (55) einer jeweiligen Packung (21) gegeneinander pressbar sind, mit seinem Randbereich als Niederhalter für die Packung (21) wirksam sein kann.

4. Siegelstation (15) nach Anspruch 2 oder 3,
wobei das Produktschutzelement (67) plattenförmig ausgebildet ist und zumindest einer der Passeinsätze (67) über das Produktschutzelement (67) in den Aufnahmeraum einbringbar ist.

5. Siegelstation (15) nach Anspruch 2 oder 3,
wobei das Produktschutzelement (67) haubenförmig ausgebildet ist und zumindest einer der Passeinsätze (65) unterhalb des Produktschutzelementes (67) in den Aufnahmeraum einbringbar ist.

6. Siegelstation (15) nach Anspruch 5,
wobei die senkrecht zur Siegelebene (57) gemessene Lage des haubenförmigen Produktschutzelementes (67) relativ zur Siegelebene (57) unabhängig von der Anzahl der eingebrachten Passeinsätze (65) fest vorgegeben ist, und wobei in dem Produktschutzelement (67) ein in der senkrecht zur Siegelebene (57) gemessenen Höhe verstellbares und in einer von der Anzahl der eingebrachten Passeinsätze (65) abhängigen Höhe fixierbares Abschlusselement (69) angeordnet ist.

7. Siegelstation (15) nach Anspruch 5 oder 6,
wobei die senkrecht zur Siegelebene (57) gemessene Höhe von Seitenwänden (68) des haubenförmigen Produktschutzelementes (67) derart bemessen ist, dass der Packungsraum (63) durch diese Seitenwände (68) zumindest im Wesentlichen gegenüber dem Siegelwerkzeug (59), insbesondere gegenüber sich senkrecht zur Siegelebene (57) erstreckenden Seitenwänden (60) des Siegelwerkzeugs (59), abgeschirmt ist.

8. Siegelstation (15) nach einem der vorhergehenden Ansprüche,
wobei zumindest einige Passeinsätze (65) oder alle Passeinsätze (65) sich hinsichtlich ihrer senkrecht zur Siegelebene (57) gemessenen Höhe voneinander unterscheiden.

9. Siegelstation (15) nach einem der vorhergehenden Ansprüche,
wobei der Aufnahmeraum nach oben durch einen, insbesondere plattenförmigen, Träger (71) begrenzt ist, an dem die in den Aufnahmeraum eingebrachten Passeinsätze (65) befestigbar sind oder an dem ein Produktschutzelement (67) gemäß einem der Ansprüche 2 bis 7 befestigbar ist, insbesondere wobei der Träger (71) aus einem thermisch isolierenden oder aus einem thermisch leitfähigen Material hergestellt ist, und/oder wobei für den Träger (71), für die Passeinsätze (65) und/oder für ein Produktschutzelement (67) gemäß einem der Ansprüche 2 bis 7 ein aktives Kühlsystem vorgesehen ist.

10. Siegelstation (15) nach einem der vorhergehenden Ansprüche,
wobei der Packungsraum (63) für den Produktbereich (53) einer jeweiligen Packung (21) ausschließlich oder im Wesentlichen oberhalb der Siegelebene (57) gelegen ist, insbesondere wobei entweder im Unterteil (15b) keine zur Aufnahme eines Produktbereiches (53) einer jeweiligen Packung (21) geeignete Vertiefung ausgebildet ist oder eine im Unterteil (15b) ausgebildete Vertiefung vollständig oder im Wesentlichen vollständig durch einen oder mehrere Fülleinsätze (75) aufgefüllt ist.

11. Siegelstation (15) nach einem der vorhergehenden Ansprüche,
wobei die Siegelstation (15) zum Verschließen von Packungen (21) ausgebildet ist, die keine vorgeformten, insbesondere durch Tiefziehen gebildeten, Bestandteile oder vorgefertigte Trays oder Schalen, sondern jeweils zumindest eine Oberfolie (25) und eine Unterfolie (23) als miteinander zu verbindende Packungsbestandteile umfassen, zwischen denen sich der Produktbereich (53) befindet, insbesondere zum Verschließen von Mehrlagen-Packungen (21), die jeweils eine Unterfolie (23), eine Oberfolie (25) und wenigstens eine dazwischen liegende Mittelfolie (77) umfassen, wobei die Unterfolie (23) mit der Mittelfolie (77) eine untere Produktlage (79) und die Oberfolie (25) mit der oder einer weiteren Mittelfolie (77) eine obere Produktlage (81) einschließt, wobei die Produktlagen (79, 81) zusammen den Produktbereich (53) der zu verschließenden Mehrlagen-Packung (21) bilden.

12. Verpackungsmaschine, insbesondere für Lebensmittelprodukte (10), mit zumindest einer Siegelstation (15) nach einem der vorhergehenden Ansprüche.

13. Verfahren zum Anpassen einer Siegelstation (15) an mit dieser zu verschließende Packungen (21), insbesondere einer Siegelstation (15) nach einem der Ansprüche 1 bis 11, wobei
- die Siegelstation (15) für eine Verpackungsmaschine, insbesondere für Lebensmittelprodukte (10), vorgesehen und zum Verschließen der Packungen (21) durch Verbinden von Packungsbestandteilen (23, 25, 77) durch Beaufschlagen mit Wärme und Druck, insbesondere durch Siegeln oder Schweißen, ausgebildet ist,
- die Packungen (21) jeweils einen ein verpacktes Produkt (10) enthaltenden Produktbereich (53) und einen neben dem Produktbereich (53), insbesondere um den Produktbereich (53) herum, verlaufenden Randbereich (55) umfassen,
- die Siegelstation (15) ein Oberteil (15a) und ein Unterteil (15b) umfasst, die auf entgegengesetzten Seiten einer Siegelebene (57) angeordnet sind, zumindest eine zur Aufnahme wenigstens einer Packung (21) vorgesehene Kammer begrenzen und zum Öffnen und Schließen der Kammer relativ zueinander senkrecht zur Siegelebene (57) bewegbar sind,
- das Oberteil (15a) ein beheizbares Siegelwerkzeug (59) und das Unterteil (15b) ein Gegenwerkzeug (61) umfasst, die einen innerhalb der Kammer gelegenen Aufnahmeraum für eine jeweilige Packung (21) begrenzen, wobei das Siegelwerkzeug (59) und das Gegenwerkzeug (61) bei geschlossener Kammer unter Zwischenlage eines zu beaufschlagenden Randbereiches (55) einer jeweiligen Packung (21) gegeneinander pressbar sind,
- der Aufnahmeraum einen zumindest teilweise oberhalb der Siegelebene (57) gelegenen Packungsraum (63) für den Produktbereich (53) einer jeweiligen Packung (21) umfasst, und
- der Packungsraum (63) durch Einbringen einer Anzahl von n ≥ 0 separaten Passeinsätzen (65) in den Aufnahmeraum hinsichtlich Größe und/oder Form an den Produktbereich (53) einer jeweiligen Packung (21) angepasst wird,
wobei zumindest einige Passeinsätze (65) oder alle Passeinsätze (65) plattenförmig ausgebildet sind, oder wobei zumindest einige Passeinsätze (65) oder alle Passeinsätze (65) jeweils an ihrer im eingebrachten Zustand der Siegelebene (57) zugewandten Unterseite konkav ausgebildet sind.

## Claims

1. A sealing station (15) for a packaging machine, in particular for food products (10), for closing packages (21) by joining package components (23, 25, 77) by applying heat and pressure, in particular by sealing or welding,
wherein the packages (21) each comprise a product region (53) containing a packaged product (10) and a marginal region (55) extending next to the product region (53), in particular around the product region (53),
said sealing station (15) comprising an upper part (15a) and a lower part (15b), which are arranged at opposite sides of a, preferably horizontal, sealing plane (57), which bound at least one chamber provided for receiving at least one package (21) and which are movable relative to one another perpendicular to the sealing plane (57) for opening and closing the chamber,
wherein the upper part (15a) comprises a heatable sealing tool (59) and the lower part (15b) comprises a counter tool (61), said sealing tool (59) and counter tool (61) bounding a receiving space located within the chamber for a respective package (21), wherein, when the chamber is closed, the sealing tool (59) and the counter tool (61) can be pressed against one another while interposing a marginal region (55) of a respective package (21) to be acted on,
wherein the receiving space comprises a packaging space (63) disposed at least partly above the sealing plane (57) for the product region (53) of a respective package (21),
wherein a plurality of separate fitting inserts (65) are provided, and wherein the packaging space (63) can be adapted to the product region (53) of a respective package (21) in terms of size and/or shape by inserting a number n ≥ 0 of the fitting inserts (65) into the receiving space,
**characterized in that**
at least some fitting inserts (65) or all fitting inserts (65) are plate-shaped, or **in that** at least some fitting inserts (65) or all fitting inserts (65) are each concave at their lower sides facing the sealing plane (57) in the inserted state.

2. A sealing station (15) according to claim 1,
wherein at least one single-part or multi-part product protection element (67) is arranged in the receiving space above the sealing plane (57), wherein at least one fitting insert (65) can be introduced into the receiving space above and/or below the product protection element (67).

3. A sealing station (15) according to claim 2,
wherein the product protection element (67) has a marginal region and is configured and arranged such that it can act with its marginal region as a holding-down device for the package (21) at least in the vicinity of a region at which the sealing tool (59) and the counter tool (61) can be pressed against one another to act on a marginal region (55) of a respective package (21).

4. A sealing station (15) according to claim 2 or 3,
wherein the product protection element (67) is plate-shaped and at least one of the fitting inserts (67) can be inserted into the receiving space via the product protection element (67).

5. A sealing station (15) according to claim 2 or 3,
wherein the product protection element (67) is hood-shaped and at least one of the fitting inserts (65) can be inserted into the receiving space below the product protection element (67).

6. A sealing station (15) according to claim 5,
wherein the position of the hood-shaped product protection element (67) relative to the sealing plane (57) that is measured perpendicular to the sealing plane (57) is fixedly predefined irrespective of the number of inserted fitting inserts (65), and wherein an end element (69) that is adjustable in the height measured perpendicular to the sealing plane (57) and fixable at a height dependent on the number of inserted fitting inserts (65) is arranged in the product protection element (67).

7. A sealing station (15) according to claim 5 or 6,
wherein the height of side walls (68) of the hood-shaped product protection element (67) measured perpendicular to the sealing plane (57) is dimensioned such that the packaging space (63) is shielded by these side walls (68) at least substantially from the sealing tool (59), in particular from side walls (60) of the sealing tool (59) extending perpendicular to the sealing plane (57).

8. A sealing station (15) according to any one of the preceding claims,
wherein at least some fitting inserts (65) or all fitting inserts (65) differ from one another with respect to their height measured perpendicular to the sealing plane (57).

9. A sealing station (15) according to any one of the preceding claims,
wherein the receiving space is upwardly bounded by a support (71), in particular a plate-shaped support, to which the fitting inserts (65) introduced into the receiving space can be fastened or to which a product protection element (67) according to any one of the claims 2 to 7 can be fastened, in particular wherein the support (71) is made of a thermally insulating or thermally conductive material, and/or wherein an active cooling system is provided for the support (71), for the fitting inserts (65) and/or for a product protection element (67) according to any one of the claims 2 to 7.

10. A sealing station (15) according to any one of the preceding claims,
wherein the packaging space (63) for the product region (53) of a respective package (21) is located exclusively or substantially above the sealing plane (57), in particular wherein either no recess suitable for receiving a product region (53) of a respective package (21) is formed in the lower part (15b) or a recess formed in the lower part (15b) is entirely or substantially completely filled by one or more filling inserts (75).

11. A sealing station (15) according to any one of the preceding claims,
wherein the sealing station (15) is configured for closing packages (21) which do not comprise any preformed components, in particular formed by deep-drawing, or prefabricated trays or shells, but each comprise at least one top film (25) and one bottom film (23) as package components to be joined together, between which the product region (53) is located, in particular for closing multilayer packages (21), which each comprise a bottom film (23), a top film (25) and at least one middle film (77) disposed therebetween, wherein the bottom film (23) encloses a bottom product layer (79) with the middle film (77) and the top film (25) encloses a top product layer (81) with the or a further middle film (77), wherein the product layers (79, 81) together form the product region (53) of the multilayer package (21) to be closed.

12. A packaging machine, in particular for food products (10), comprising at least one sealing station (13a) according to any one of the preceding claims.

13. A method for adapting a sealing station (15) to packages (21) to be closed therewith, in particular a sealing station (15) according to any one of the claims 1 to 11, wherein
- the sealing station (15) is provided for a packaging machine, in particular for food products (10), and is configured for closing the packages (21) by joining package components (23, 25, 77) by applying heat and pressure, in particular by sealing or welding,
- the packages (21) each comprise a product region (53) containing a packaged product (10) and a marginal region (55) extending next to the product region (53), in particular around the product region (53),
- the sealing station (15) comprises an upper part (15a) and a lower part (15b), which are arranged at opposite sides of a sealing plane (57), which bound at least one chamber provided for receiving at least one package (21) and which are movable relative to one another perpendicular to the sealing plane (57) for opening and closing the chamber,
- the upper part (15a) comprises a heatable sealing tool (59) and the lower part (15b) comprises a counter tool (61), said sealing tool (59) and counter tool (61) bounding a receiving space located within the chamber for a respective package (21), wherein, when the chamber is closed, the sealing tool (59) and the counter tool (61) can be pressed against one another while interposing a marginal region (55) of a respective package (21) to be acted on,
- the receiving space comprises a packaging space (63) disposed at least partly above the sealing plane (57) for the product region (53) of a respective package (21), and
- the packaging space (63) is adapted to the product region (53) of a respective package (21) in terms of size and/or shape by inserting a number n ≥ 0 of separate fitting inserts (65) into the receiving space, wherein at least some fitting inserts (65) or all fitting inserts (65) are plate-shaped, or wherein at least some fitting inserts (65) or all fitting inserts (65) are each concave at their lower sides facing the sealing plane (57) in the inserted state.

## Revendications

1. Station de scellage (15) pour une machine d'emballage, en particulier pour des produits alimentaires (10), destinée à fermer des emballages (21) en reliant des composants d'emballage (23, 25, 77) par application de chaleur et de pression, en particulier par scellage ou soudage,
les emballages (21) comprenant chacun une zone de produit (53) qui contient un produit emballé (10) et une zone de bord (55) qui s'étend à côté de la zone de produit (53), en particulier autour de la zone de produit (53), comprenant une partie supérieure (15a) et une partie inférieure (15b) qui sont disposées sur des côtés opposés d'un plan de scellage (57), de préférence horizontal, qui délimitent au moins une chambre prévue pour recevoir au moins un emballage (21) et qui sont mobiles l'une par rapport à l'autre perpendiculairement au plan de scellage (57) pour ouvrir et fermer la chambre,
dans laquelle
la partie supérieure (15a) comprend un outil de scellage (59) pouvant être chauffé, et la partie inférieure (15b) comprend un contre-outil (61), qui délimitent un espace de réception, situé à l'intérieur de la chambre, pour un emballage (21) respectif,
l'outil de scellage (59) et le contre-outil (61) peuvent être pressés l'un contre l'autre lorsque la chambre est fermée, avec interposition d'une zone de bord (55) à solliciter d'un emballage (21) respectif,
l'espace de réception comprend un espace d'emballage (63), situé au moins partiellement au-dessus du plan de scellage (57), pour la zone de produit (53) d'un emballage (21) respectif,
il est prévu plusieurs inserts d'ajustage (65) séparés, et
l'espace d'emballage (63) peut être ajusté en termes de taille et/ou de forme à la zone de produit (53) d'un emballage (21) respectif par insertion d'un nombre n ≥ 0 d'inserts d'ajustage (65) dans l'espace de réception,
**caractérisée en ce que**
au moins certains inserts d'ajustage (65) ou tous les inserts d'ajustage (65) sont réalisés en forme de plaque, ou
**en ce qu'**au moins certains inserts d'ajustage (65) ou tous les inserts d'ajustage (65) sont chacun concaves sur leur face inférieure tournée vers le plan de scellage (57), à l'état inséré.

2. Station de scellage (15) selon la revendication 1,
dans laquelle au moins un élément de protection de produit (67) en une ou plusieurs parties est disposé dans l'espace de réception au-dessus du plan de scellage (57), au moins un insert d'ajustage (65) pouvant être inséré dans l'espace de réception au-dessus et/ou au-dessous de l'élément de protection de produit (67).

3. Station de scellage (15) selon la revendication 2,
dans laquelle l'élément de protection de produit (67) présente une zone de bord et est conçu et disposé de telle sorte qu'il peut agir, avec sa zone de bord, comme élément de maintien pour l'emballage (21), au moins à proximité d'une zone où l'outil de scellage (59) et le contre-outil (61) peuvent être pressés l'un contre l'autre pour solliciter une zone de bord (55) d'un emballage (21) respectif.

4. Station de scellage (15) selon la revendication 2 ou 3,
dans laquelle l'élément de protection du produit (67) est réalisé en forme de plaque, et l'un au moins des inserts d'ajustage (67) peut être inséré dans l'espace de réception par l'intermédiaire de l'élément de protection de produit (67).

5. Station de scellage (15) selon la revendication 2 ou 3,
dans laquelle l'élément de protection de produit (67) est réalisé en forme de capot, et l'un au moins des inserts d'ajustage (65) peut être inséré dans l'espace de réception en dessous de l'élément de protection de produit (67).

6. Station de scellage (15) selon la revendication 5,
dans laquelle la position, mesurée perpendiculairement au plan de scellage (57), de l'élément de protection de produit (67) en forme de capot par rapport au plan de scellage (57) est prédéfinie de manière fixe, indépendamment du nombre d'inserts d'ajustage (65) insérés, et
un élément de terminaison (69), réglable en hauteur mesurée perpendiculairement au plan de scellage (57) et pouvant être fixé à une hauteur dépendant du nombre d'inserts d'ajustage (65) insérés, est disposé dans l'élément de protection de produit (67).

7. Station de scellage (15) selon la revendication 5 ou 6,
dans laquelle la hauteur, mesurée perpendiculairement au plan de scellage (57), des parois latérales (68) de l'élément de protection de produit (67) en forme de capot est dimensionnée de telle sorte que l'espace d'emballage (63) est protégé par ces parois latérales (68) au moins sensiblement par rapport à l'outil de scellage (59), en particulier par rapport aux parois latérales (60) de l'outil de scellage (59) qui s'étendent perpendiculairement au plan de scellage (57).

8. Station de scellage (15) selon l'une des revendications précédentes,
dans laquelle au moins certains inserts d'ajustage (65) ou tous les inserts d'ajustage (65) se distinguent les uns des autres en ce qui concerne leur hauteur mesurée perpendiculairement au plan de scellage (57).

9. Station de scellage (15) selon l'une des revendications précédentes,
dans laquelle l'espace de réception est délimité vers le haut par un support (71), en particulier en forme de plaque, sur lequel peuvent être fixés les inserts d'ajustage (65) insérés dans l'espace de réception ou sur lequel peut être fixé un élément de protection de produit (67) selon l'une des revendications 2 à 7,
en particulier, le support (71) est réalisé en un matériau thermiquement isolant ou en un matériau thermiquement conducteur, et/ou
un système de refroidissement actif est prévu pour le support (71), pour les inserts d'ajustage (65) et/ou pour un élément de protection de produit (67) selon l'une des revendications 2 à 7.

10. Station de scellage (15) selon l'une des revendications précédentes,
dans laquelle l'espace d'emballage (63) pour la zone de produit (53) d'un emballage (21) respectif est situé exclusivement ou sensiblement au-dessus du plan de scellage (57),
en particulier, soit aucune cavité appropriée pour recevoir une zone de produit (53) d'un emballage (21) respectif n'est formée dans la partie inférieure (15b), soit une cavité formée dans la partie inférieure (15b) est entièrement ou sensiblement entièrement remplie par un ou plusieurs inserts de remplissage (75).

11. Station de scellage (15) selon l'une des revendications précédentes,
dans laquelle la station de scellage (15) est conçue pour fermer des emballages (21) qui ne comprennent pas de composants préformés, en particulier formés par emboutissage, ou de plateaux ou barquettes préfabriqués, mais qui comprennent chacun au moins un film supérieur (25) et un film inférieur (23) en tant que composants d'emballage à relier entre eux, entre lesquels se trouve la zone de produit (53), en particulier pour fermer des emballages multicouches (21) qui comprennent chacun un film inférieur (23), un film supérieur (25) et au moins un film central (77) situé entre eux, le film inférieur (23) avec le film central (77) renfermant une couche inférieure de produit (79), et le film supérieur (25) avec le ou un autre film central (77) renfermant une couche supérieure de produit (81), les couches de produit (79, 81) formant ensemble la zone de produit (53) de l'emballage multicouche (21) à fermer.

12. Machine d'emballage, en particulier pour produits alimentaires (10), comprenant au moins une station de scellage (15) selon l'une des revendications précédentes.

13. Procédé d'ajustage d'une station de scellage (15) à des emballages (21) à fermer au moyen de celle-ci, en particulier d'une station de scellage (15) selon l'une des revendications 1 à 11, dans lequel
- la station de scellage (15) est prévue pour une machine d'emballage, en particulier pour des produits alimentaires (10), et est conçue pour fermer les emballages (21) en reliant des composants d'emballage (23, 25, 77) par application de chaleur et de pression, en particulier par scellage ou soudage,
- les emballages (21) comprennent chacun une zone de produit (53) qui contient un produit emballé (10) et une zone de bord (55) qui s'étend à côté de la zone de produit (53), en particulier autour de la zone de produit (53),
- la station de scellage (15) comprend une partie supérieure (15a) et une partie inférieure (15b) qui sont disposées sur des côtés opposés d'un plan de scellage (57), qui délimitent au moins une chambre prévue pour recevoir au moins un emballage (21) et qui sont mobiles l'une par rapport à l'autre perpendiculairement au plan de scellage (57) pour ouvrir et fermer la chambre,
- la partie supérieure (15a) comprend un outil de scellage (59) pouvant être chauffé, et la partie inférieure (15b) comprend un contre-outil (61), qui délimitent un espace de réception, situé à l'intérieur de la chambre, pour un emballage (21) respectif, l'outil de scellage (59) et le contre-outil (61) pouvant être pressés l'un contre l'autre lorsque la chambre est fermée, avec interposition d'une zone de bord (55) à solliciter d'un emballage (21) respectif,
- l'espace de réception comprend un espace d'emballage (63), situé au moins partiellement au-dessus du plan de scellage (57), pour la zone de produit (53) d'un emballage (21) respectif, et
- l'espace d'emballage (63) est ajusté en termes de taille et/ou de forme à la zone de produit (53) d'un emballage (21) respectif par insertion d'un nombre n ≥ 0 d'inserts d'ajustage (65) séparés dans l'espace de réception, dans lequel
moins certains inserts d'ajustage (65) ou tous les inserts d'ajustage (65) sont réalisés en forme de plaque, ou
au moins certains inserts d'ajustage (65) ou tous les inserts d'ajustage (65) sont chacun concaves sur leur face inférieure tournée vers le plan de scellage (57), à l'état inséré.
